# EUROPEAN PATENT SPECIFICATION

(11) **EP 2 922 347 B1**
(45) Date of publication and mention of the grant of the patent: **28.06.2017**
(21) Application number: 13855240.1
(22) Date of filing: 28.08.2013
(51) Int. Cl.: H04W 48/12, H04W 92/20

(54) **METHOD, SN, BASE STATION, AND SYSTEM FOR CELL COMBINATION BASED ON MULTIPLE SMALLCELL BASE STATIONS**
VERFAHREN, SN, BASISSTATION UND SYSTEM FÜR EINE ZELLKOMBINATION AUF BASIS MEHRERER KLEINZELLIGER BASISSTATIONEN
PROCÉDÉ, SN, STATION DE BASE, ET SYSTÈME, POUR UNE COMBINAISON DE CELLULES BASÉE SUR UNE PLURALITÉ DE STATIONS DE BASE SMALLCELL

(30) Priority: 19.11.2012 CN 201210468239
(43) Date of publication of application: 23.09.2015
(73) Proprietor: ZTE Corporation, Shenzhen, Guangdong 518057 (CN)
(72) Inventor: ZHAN, Jianming, Shenzhen Guangdong 518057 (CN)
(74) Representative: Brevalex
(86) International application number: PCT/CN2013/082494
(87) International publication number: WO 2014/075490

(56) References cited:
- EP-A2- 2 930 965
- WO-A1-2012/108803
- CN-A- 101 394 647
- CN-A- 101 400 111
- CN-A- 102 685 900
- MATTHEW WEBB ET AL: "Future Evolution in Wireless Network Architectures: Towards a 'Cloud of Antennas'", VEHICULAR TECHNOLOGY CONFERENCE (VTC FALL), 2012 IEEE, IEEE, 3 September 2012 (2012-09-03), pages 1-5, XP032294894, DOI: 10.1109/VTCFALL.2012.6399319 ISBN: 978-1-4673-1880-8

## Description

### TECHNICAL FIELD

The disclosure relates to the technical field of communications, and particularly to a method, a Signal NodeB (SN), a Smallcell NodeB, and a system for performing cell combination based on multiple Smallcell NodeBs in a Wideband Code Division Multiple Access (WCDMA) system.

### BACKGROUND

In a Universal Mobile Telecommunications System (UMTS) radio access system, two kinds of key network elements, namely a Radio Network Controller (RNC) and a NodeB, are contained; in a universal networking mode, a main coverage way is: the RNC plus an integrated macro NodeB having multiple sectors, or the RNC plus a distributed NodeB Building Base band Unit (BBU) + a macro Radio Remote Unit (RRU), and in addition there is a little micro NodeB blind or hotspot coverage; seen from full network coverage, a majority of the coverage ways are a Macrocell plus a few Smallcells.

With rapid development of a mobile wideband service, a skyrocketing application of a data service of various 3rd Generation Partnership Project (3GPP) uniform smart terminals, such as a mobile phone, a data card, an iPad, and etc., directly results in that data traffic in a hotspot area (which includes various indoor or outdoor scenes) exhibits an explosive increasing tendency, a problem can hardly be completely solved only by improving a performance of a traditional Macrocell, a new network solution is needed to be provided based on an original traditional macro station network.

A current mobile communication industry mostly adopts a Smallcell NodeB to solve a rapidly increased data traffic requirement.

In a current lub industry, a Smallcell mainly has the following three forms: a Microcell (2x5w∼2x10w), a Metrocell (2xlw), and a Picocell (2x250mw).

These Smallcell specifications may be applied to outdoor hotspot or hot area coverage, indoor hotspot or depth hot area coverage; an amount thereof is large, and the amount is several times or dozen times that of current macro stations; particularly the amount of Metrocells and Picocells may be very large. If the Smallcell is massively deployed while a traditional small NodeB form is still adopted for deployment, then the following problems may be caused:
1) with regard to deployment of more Smallcells, connections with the RNC are needed to be established by all multiple Smallcells, and transmission acquirement is relatively inconvenient; simultaneously in network deployment, multiple Smallcell connections are needed to be configured at an RNC side by an engineer, and both the network deployment and expansion are inconvenience. That results in that configuration is needed to be performed at the RNC side each time a hotspot is expanded;
2) when deploying multiple Smallcells, an RNC expansion requirement is easily caused; first the amount of NodeBs connected with the RNC is limited, thus plenty of Smallcell deployment may result in largely expanding the RNC, and a machine room site space may also be increased, bringing a sharp increase of CAPital Expenditure (CAPEX) and OPerating Expense (OPEX);
3) the amount of cells connected with the RNC is limited, and a utilization ratio is relatively low; plenty of Smallcell applications result in sharp expansion of configuration of the RNC; because generally with regard to a capacity of one RNC, the capacity of a cell amount is an important bottleneck, and although the capacity of one cell of one Smallcell NodeB is relatively small, the RNC is also needed to allocate a resource and processing capability of one cell like what is done to treat a macro cell; for example, 4 carrier waves and 3 sectors need averagely each cell to have 64∼96 High Speed Uplink Packet Accesses (HSPA)+users, each sector totally needs to process 256∼384 (=4*64∼4*96) HSPAs+users. However, each cell of one Smallcell NodeB only needs to support 16∼32 HSPAs+users, comparing with a user amount capacity needed to be processed by the macro cell and the Smallcell, a macro cell capacity is 2-6 times a micro cell capacity;
4) mobility between Smallcells may result in generation of plenty of soft handover signals of an lub interface;
5) because the Smallcell and a Macrocell are connected to different RNCs in a logic connection aspect, which results in occurrence of a software handover into an lur soft handover across the RNC between the Smallcell and the Macrocell; the amount of signal interactions is large, handover time delay is long, handover call-drop ratio is high, and resource consumption is large.

The article "Future Evolution in Wireless Network Architectures: Towards a 'Cloud of Antennas'" (Vehicular Technology Conference (VTC Fall), 2012 IEEE) highlights the significant evolutionary potential in wireless communication networks, taking account of falling costs of RF hardware and increasing availability of powerful centralized signal processing. This so-called 'cloud of antennas' (CoA) allows a central radio controller to manage a large number of remote antennas (RAs) with increasing control over their radio and radio access network behaviour. By introducing autonomous terminal reporting and coordination of broadcast signalling over many RAs, the concepts of a self-organizing, and terminal-centric network are described. These could lead to significantly improved flexibility in the network deployment, reduced downlink transmit power, and reduced control signalling load for the ordinary management of the terminals. The CoA is also compared with other approaches currently being researched.

### SUMMARY

In view of this, a main purpose of an embodiment of the disclosure is to provide a method, an SN, a Smallcell NodeB, and a system for performing cell combination based on multiple Smallcell NodeBs, so as to avoid RNC expansion caused by plenty of Smallcell NodeB applications, to avoid occurrence of a soft handover between plenty of Smallcells and the occurrence of a lur soft handover across an RNC between a Macrocell and a Smallcell, and to improve user experience.

The features of the method and device according to the present disclosure are defined in the independent claims, and the preferable features according to the present invention are defined in the dependent claims. The method, the SN, the Smallcell NodeB, and the system for performing cell combination based on multiple Smallcell NodeBs, which are provided by the embodiment of the disclosure, combines multiple Smallcell NodeBs into a logic NodeB at a NodeB side, and combines multiple intra-frequency Smallcells into an intra-frequency logic cell; an RNC processing resource needed to be reserved by this intra-frequency logic cell is substantially identical to the RNC processing resource needed to be reserved by a traditional Macrocell; this solution benefits deploying and opening multiple Smallcell NodeBs or expansion in the same Macrocell, also can avoid RNC expansion caused by plenty of Smallcell NodeB applications, and effectively avoids occurrence of a soft handover between plenty of Smallcells and the occurrence of an lur soft handover across the RNC between a Macrocell and a Smallcell, thus avoids lowered user experienced brought thereby, and simultaneously reduces lub transmission pressure and lur transmission pressure; in addition, the embodiment of the disclosure combines multiple cells into one intra-frequency logic cell, simultaneously also implements search perception of a Smallcell NodeB coverage area belonging to the UE in the same intra-frequency logic cell, thus implements multiplexing of the HS-PDSCH code channel resource of different coverage areas of multiple Smallcell NodeBs, and thus implements multiplexing of an HS-PDSCH code channel resource of different coverage areas of multiple Smallcell NodeBs, and improves throughput of the overall intra-frequency logic cell.

### BRIEF DESCRIPTION OF THE DRAWINGS

Fig. 1 is a flowchart of one embodiment of a method for performing cell combination based on multiple Smallcell NodeBs of an embodiment of the disclosure;
Fig. 2-1 is an allocation relationship among an lub interface control plane and a user plane and an SN and a Smallcell;
Fig. 2-2 is a first deployment form of an SN in a Smallcell solution in one embodiment of a method for performing cell combination based on multiple Smallcell NodeBs of an embodiment of the disclosure;

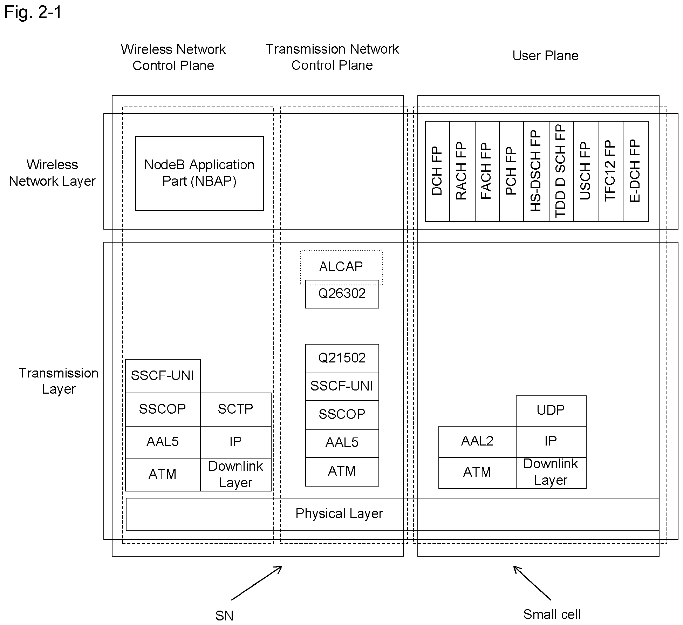

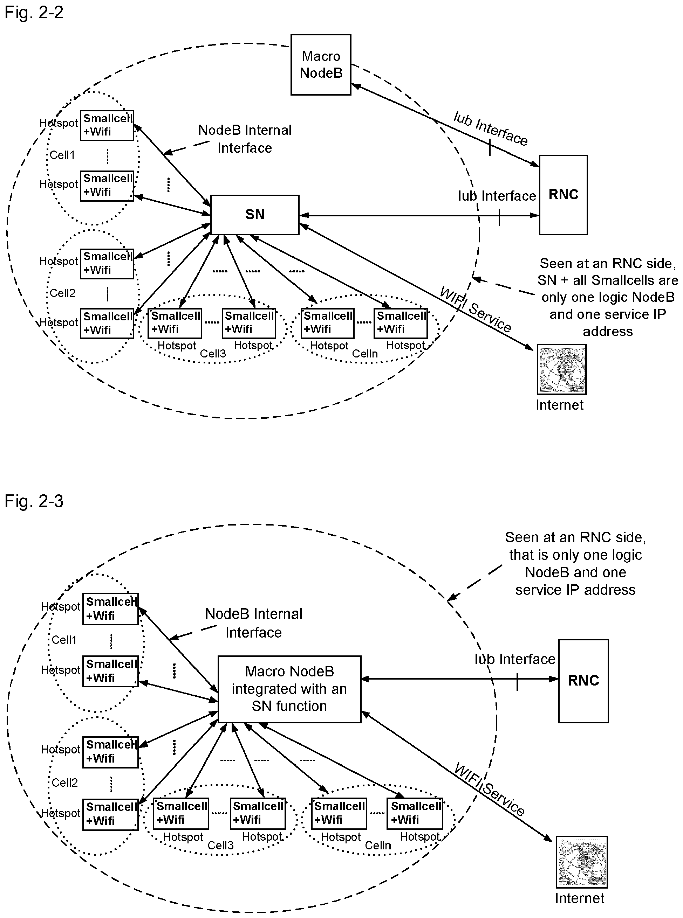

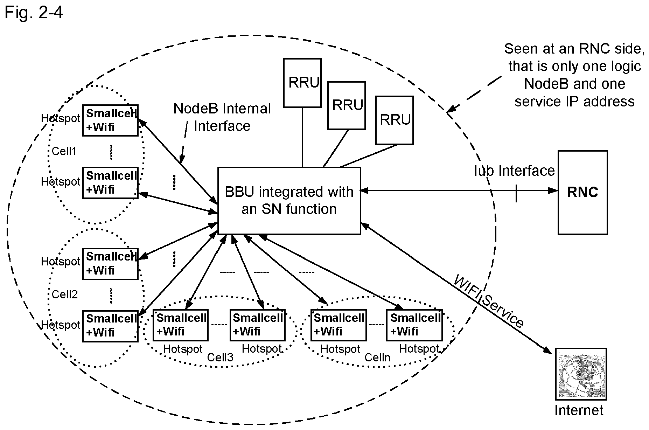

Fig. 2-3 is a second deployment form of an SN in a Smallcell solution in one embodiment of a method for performing cell combination based on multiple Smallcell NodeBs of an embodiment of the disclosure;
Fig. 2-4 is a third deployment form of an SN in a Smallcell solution in one embodiment of a method for performing cell combination based on multiple Smallcell NodeBs of an embodiment of the disclosure;

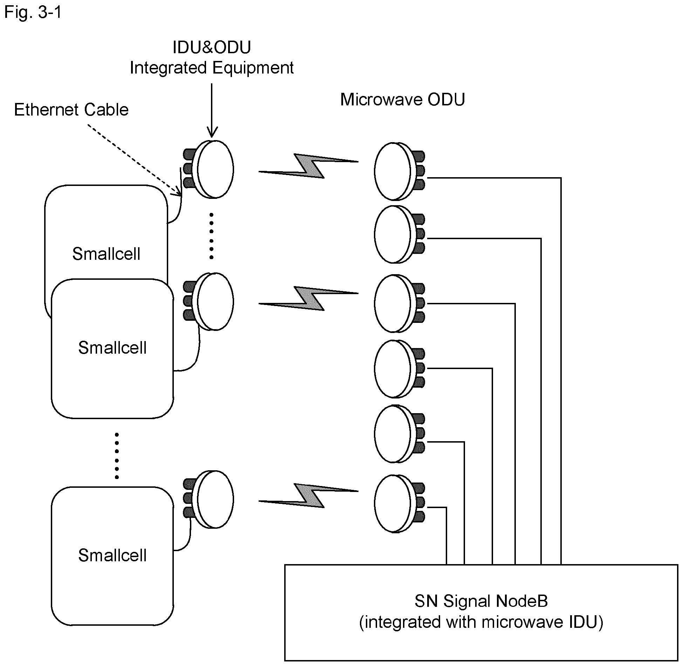

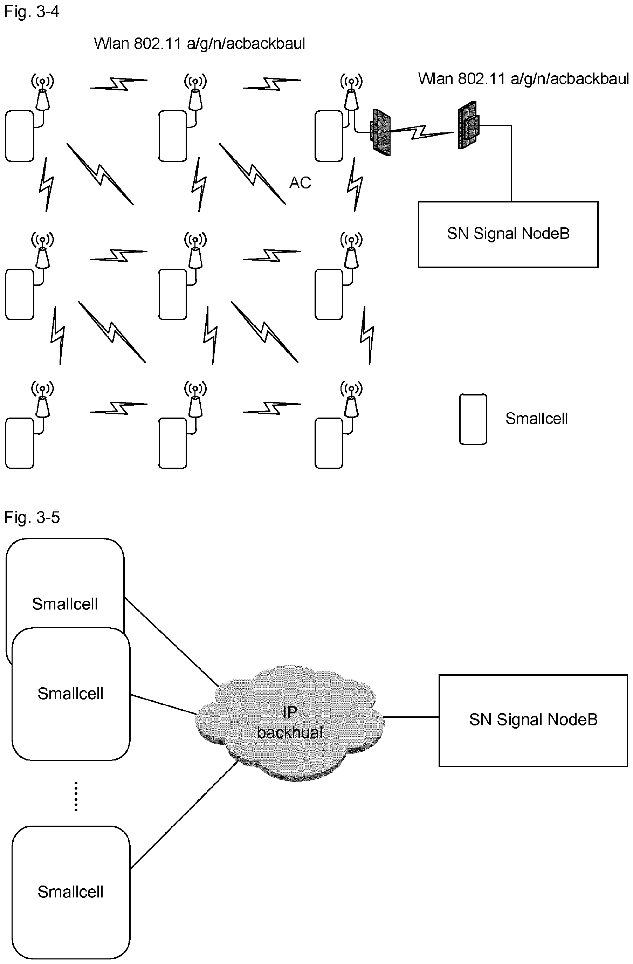

Fig. 3-1 is a diagram of a star connection way between the SN and multiple Smallcell NodeBs in the above embodiment (a microwave IDU is integrated into the SN);

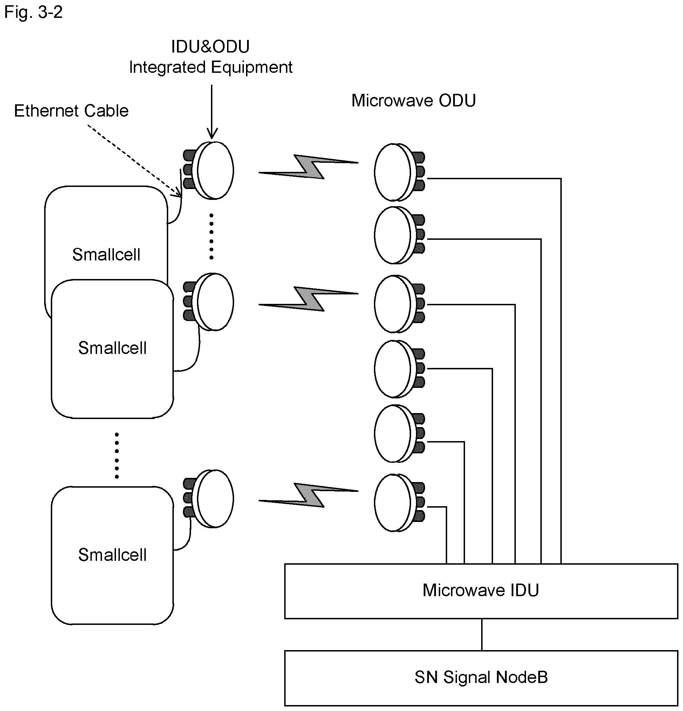

Fig. 3-2 is a diagram of another star connection way between the SN and multiple Smallcell NodeBs in the above embodiment (the microwave IDU is not integrated into the SN);

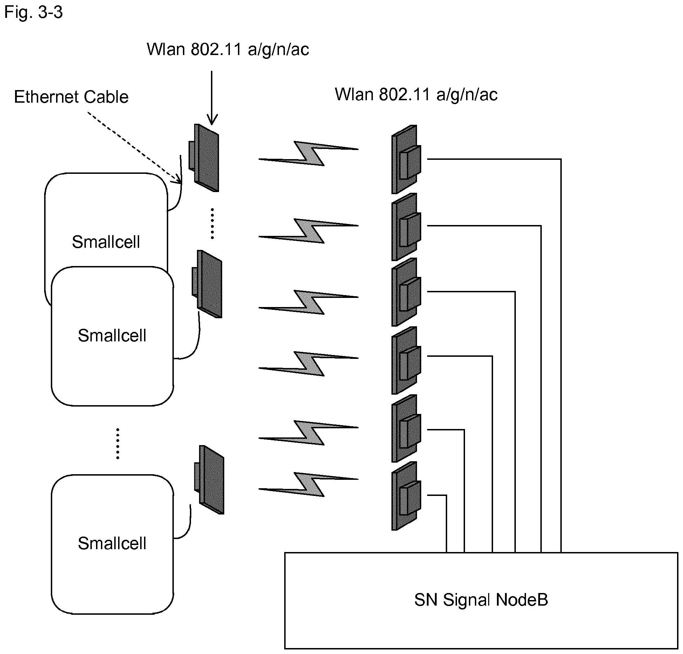

Fig. 3-3 is a diagram showing that a connection between the SN and multiple Smallcell NodeBs adopts a star connection way of Wlan802.11a/g/n/ac in the above embodiment;
Fig. 3-4 is a diagram showing that a connection between the SN and multiple Smallcell NodeBs adopts a Mesh networking connection way of Wlan802.11a/g/n/ac in the above embodiment;
Fig. 3-5 is a diagram showing that a connection between the SN and multiple Smallcell NodeBs adopts a wired Ethernet IP connection way in the above embodiment;

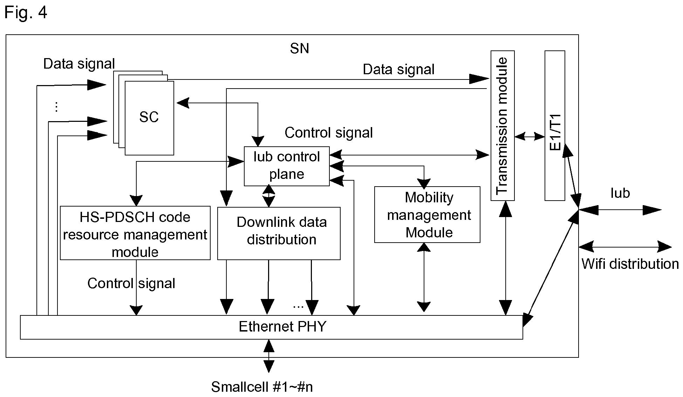

Fig. 4 is a diagram of an internal function module of an SN in an embodiment of the disclosure;

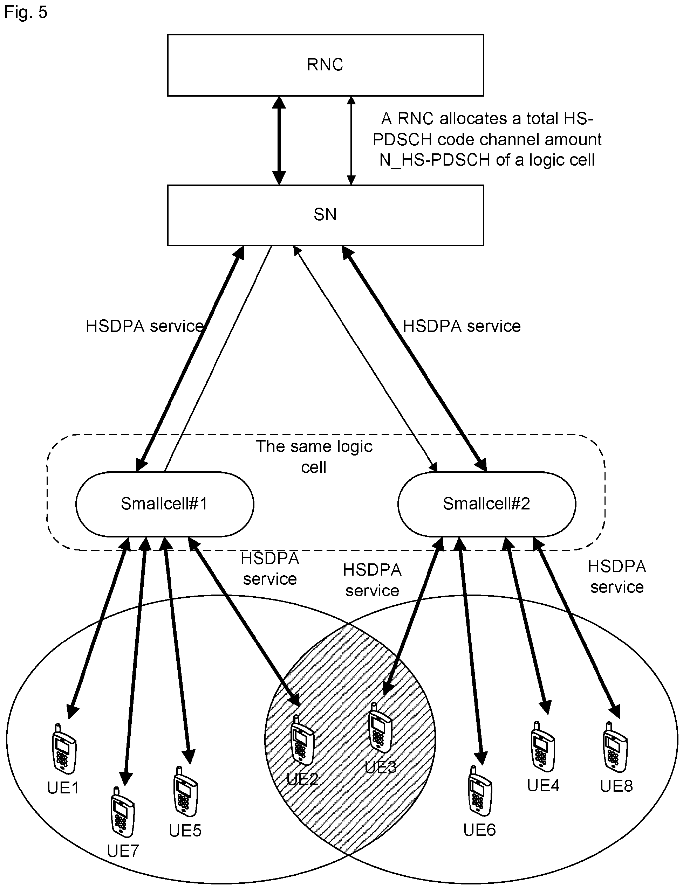

Fig. 5 is a service connection relationship diagram of an HSDPA user in multiple Smallcell NodeBs (which belong to the same logic cell) in an embodiment of the disclosure;

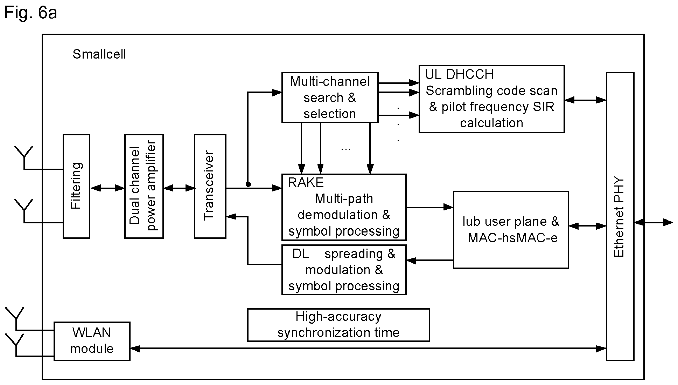

Fig. 6a is an internal structure diagram of a Smallcell NodeB in an embodiment of the disclosure;

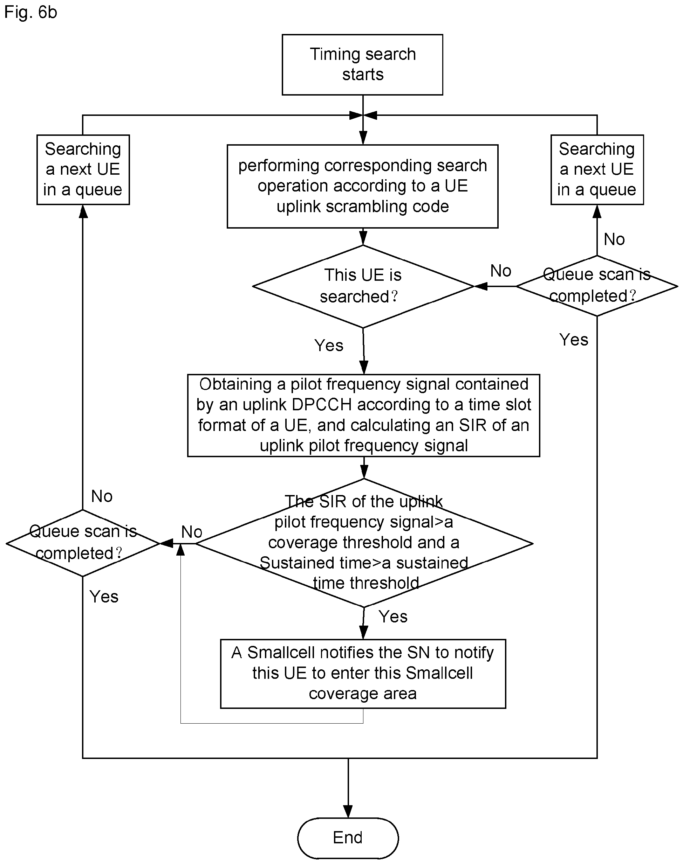

Fig. 6b is flow reference diagram of a timing search module of a Smallcell NodeB in an embodiment of the disclosure;

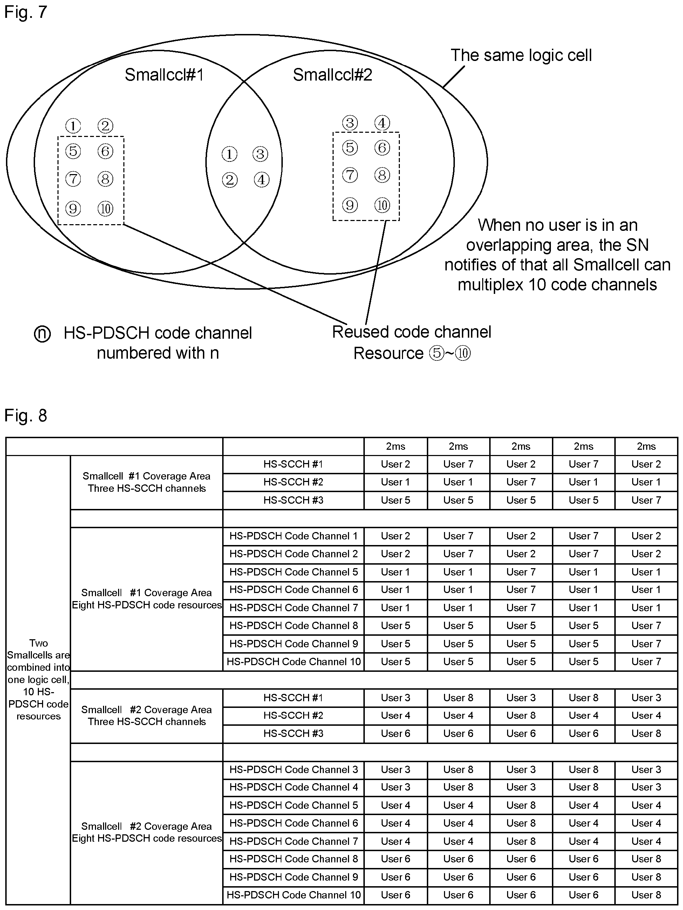

Fig. 7 is a management allocation diagram of 10 HS-PDSCH code channels in the same logic cell in two Smallcell NodeBs in an embodiment of the disclosure;
Fig. 8 is a diagram explaining a situation by taking an example based on Fig. 5 that an HS-PDSCH code channel resource is multiplexed and scheduled in two Smallcell NodeBs in the situation that 2 Smallcells are combined into one intra-frequency logic cell;

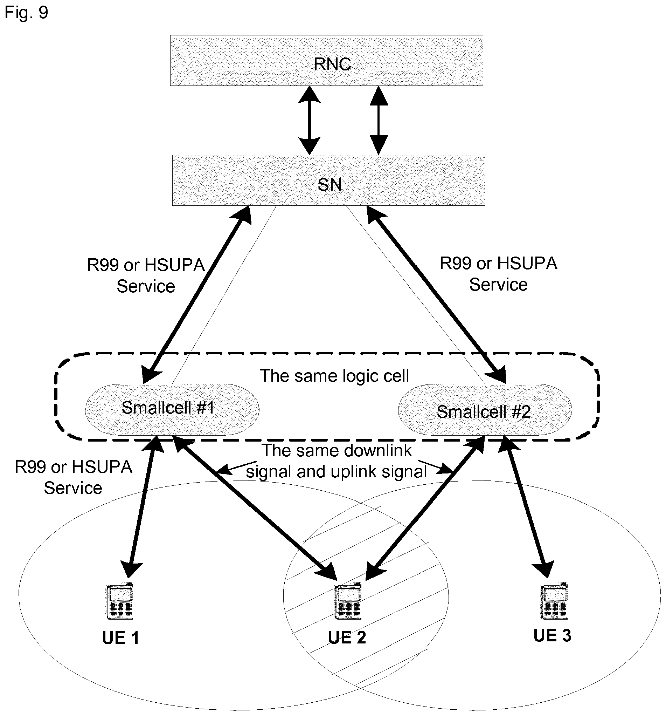

Fig. 9 is a diagram of a service connection relationship of a non-HSDPA user in multiple Smallcell NodeBs (belonging to the same logic cell) of an embodiment of the disclosure;

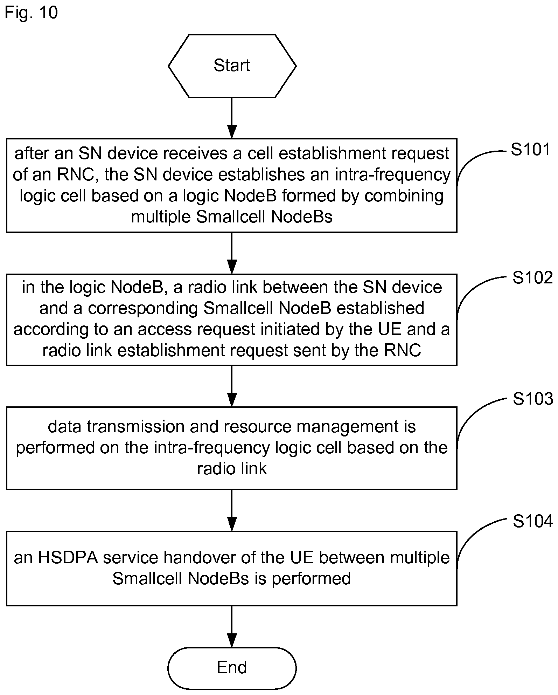

Fig. 10 is a flowchart of another embodiment of a method for performing cell combination based on multiple Smallcell NodeBs of an embodiment of the disclosure;

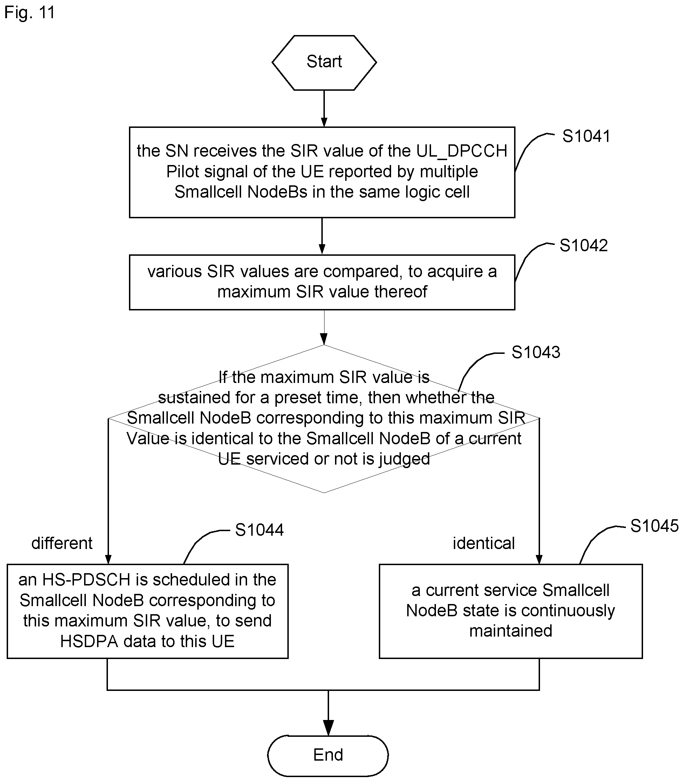

Fig. 11 is a flowchart of performing an HSDPA service handover of a UE between multiple Smallcell NodeBs in another embodiment of a method for performing cell combination based on multiple Smallcell NodeBs of an embodiment of the disclosure;

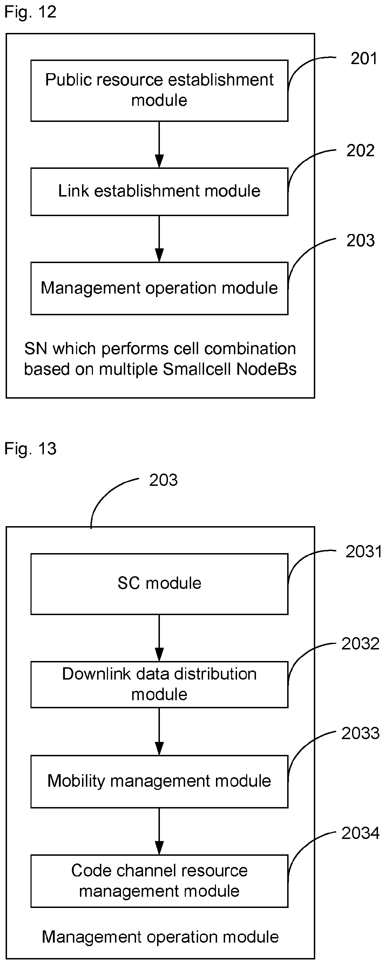

Fig. 12 is a structure diagram of an embodiment of an SN for performing cell combination based on multiple Smallcell NodeBs of an embodiment of the disclosure;
Fig. 13 is a structure diagram of a management operation module in an embodiment of an SN for performing cell combination based on multiple Smallcell NodeBs of an embodiment of the disclosure;

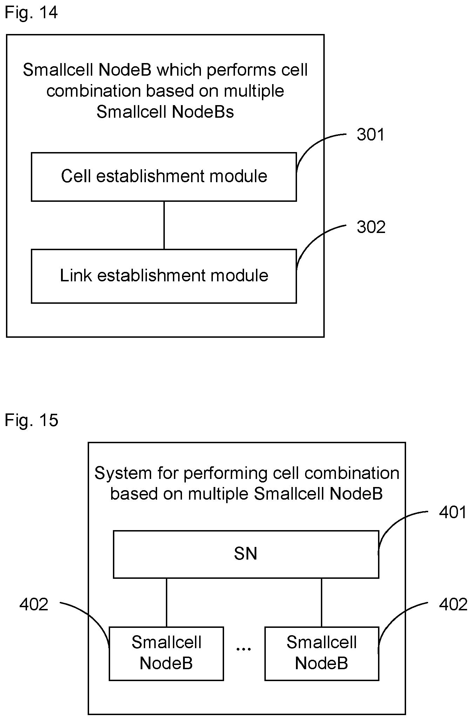

Fig. 14 is a structure diagram of an embodiment of a Smallcell NodeB for performing cell combination based on multiple Smallcell NodeBs of an embodiment of the disclosure; and
Fig. 15 is a structure diagram of an embodiment of a system for performing cell combination based on multiple Smallcell NodeBs of an embodiment of the disclosure.

### DETAILED DESCRIPTION

In order to make a technical scheme of the disclosure more clear and explicit, further detail description will be performed below in combination with the drawings.

A solution of an embodiment of the disclosure mainly is: multiple Smallcell NodeBs are combined into one logic NodeB at a NodeB side, multiple intra-frequency Smallcells are combined into one intra-frequency logic cell; an RNC processing resource needed to be reserved by this intra-frequency logic cell is substantially identical to the RNC processing resource needed to be reserved by a traditional Macrocell, so as to benefit deploying and opening multiple Smallcell NodeBs or expansion in the same Macrocell, to avoid RNC expansion caused by plenty of Smallcell NodeB applications, to avoid occurrence of a soft handover between plenty of Smallcells and an lur soft handover across an RNC between a Macrocell and a Smallcell, and simultaneously to reduce lub transmission pressure and lur transmission pressure; in addition, to implement search perception of a Smallcell NodeB coverage area belonging to a UE in the same intra-frequency logic cell, to implement multiplexing of an HS-PDSCH code channel resource in different coverage areas of multiple Smallcell NodeBs, and to improve throughput of an overall intra-frequency logic cell.

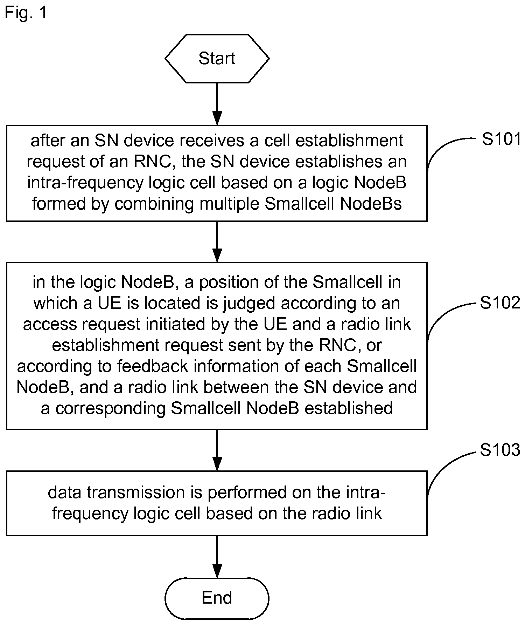

Specifically, as shown in Fig. 1, an embodiment of the disclosure provides a method for performing cell combination based on multiple Smallcell NodeBs, which includes:
Step S101: after an SN receives a cell establishment request of an RNC, the SN establishes an intra-frequency logic cell based on a logic NodeB formed by combining multiple Smallcell NodeBs.

Wherein, an lub interface control plane and an lub interface user plane of a NodeB are separated, and are implemented separately in the SN and the Smallcell NodeB.

What proposed by the embodiment of the disclosure is: at a Smallcell small power NodeB side, multiple Smallcell NodeBs are combined into a logic NodeB, multiple intra-frequency Smallcells are combined into an intra-frequency logic cell; this method separates baseband processing and signal processing at a NodeB; with reference to Fig. 2-1 and Fig. 2-2, multiple Smallcell NodeBs are connected through the SN and the RNC; seen from an RNC side, multiple Smallcell NodeBs belong to one logic NodeB; seen from an RNC processing resource, an intra-frequency physical cell of multiple Smallcells seems to be one intra-frequency logic cell, by which the RNC processing resource needs to be reserved is substantially identical to the RNC processing resource needs to be reserved by a traditional Macrocell, therefore this solution benefit deploying and opening multiple Smallcell NodeBs or expansion in the same Macrocell much in a project.

This embodiment separates an lub interface control plane and a user plane of the NodeB (with reference to Fig 2-1), which are separately implemented in the SN and the Smallcell NodeB, and the lub interface control plane is implemented in the SN, and the lub interface user plane is implemented in the Smallcell; in addition, the Smallcell NodeB also implements baseband processing, radio frequency processing of user plane data; separation of the SN and the Smallcell NodeB is embodied in separation of a control plane and a user plane of an lub interface, thus an interaction interface between the SN and the Smallcell becomes a low speed interface relationship; a traditional microwave or a low cost Wireless Local Area Network (WLAN) may be adopted as a transmission means between the SN and the Smallcell NodeB, because adopting low cost transmission deployment is one of key factors of rapid deployment of plenty of Smallcell NodeBs. Relative to a traditional BBU+RRU architecture which adopts an optical fibre for transmission, an SN-Smallcell architecture can effectively avoid a problem that an actual network deployment optical resource is inadequate or deploying the optical fibre brings a high networking cost, and can adopt low cost WLAN or microwave transmission.

Specifically, the following deployment schemes of the SN may be possible:
As shown in Fig. 2-2, Fig. 2-2 is a first deployment form of the SN in a Smallcell solution, wherein, the SN and a macro NodeB are deployed separately, combination of multiple intra-frequency physical Smallcells into one intra-frequency logic cell is implemented through the SN; in addition, combination of multiple Smallcell NodeBs are further implemented; seen from the RNC side, all Smallcells are one logic NodeB, to facilitate overall rapid deployment and expansion of multiple Smallcell NodeBs. In Fig. 2-2, a Wireless Fidelity (Wifi) function may be selectively configured by the Smallcell as required.
As shown in Fig. 2-3, Fig. 2-3 is a second deployment form of the SN in the Smallcell solution, wherein, an SN function is integrated into a certain macro NodeB function; seen from the RNC side, this Macro NodeB and all connected Smallcell NodeBs are a heterogeneous logic NodeB. In Fig. 2-3, the Wifi function may be selectively configured by the Smallcell as required.
As shown in Fig. 2-4, Fig. 2-4 is a third deployment form of the SN in the Smallcell solution, wherein, the SN function is integrated into a BBU of a certain BBU-RRU distributed NodeB; seen from the RNC side, this BBU and all connected Smallcell NodeBs are the heterogeneous logic NodeB. In Fig. 2-4, the Wifi function may be selectively configured by the Smallcell as required.

In various logic NodeBs, the SN and the RNC are connected through the lub interface, identical to the related art, in which a NodeB Application Part (NBAP) function of a Radio Network Layer (RNL) at a NodeB side of the lub interface is implemented through an lub control plane module, and a 3rd Generation Partnership Project Technical Specification (3GPP TS) 25.433 R99/R5/R6/R7/R8/R9/R10/R11 protocol is obeyed. This lub control plane module centrally processes lub control plane signals of all Smallcell NodeBs connected with this SN, and seen from the RNC side, all Smallcell NodeBs connected with this SN belong to one logic NodeB.

A connection way between the SN and each Smallcell NodeB, may specifically include but may not be limited to the followings:
As shown in Fig. 3-1, Fig. 3-1 shows that a connection between the SN and multiple Smallcell NodeBs adopts a star connection way of microwave transmission, wherein a digital microwave Indoor Unit (IDU) is integrated into the SN.
As shown in Fig. 3-2, Fig. 3-2 shows that the connection between the SN and multiple Smallcell NodeBs adopts the star connection way of the microwave transmission, and an IDU is not integrated into the SN.
As shown in Fig. 3-3, Fig. 3-3 shows that the connection between the SN and multiple Smallcell NodeBs adopts the star connection way of Wlan802.11a/g/n/ac.
As shown in Fig. 3-4, Fig. 3-4 shows the connections between the SN and multiple Smallcell NodeBs adopt a Mesh networking connection way of Wlan802.11a/g/n/ac.
As shown in Fig. 3-5, Fig. 3-5 shows the connection between the SN and multiple Smallcell NodeBs adopts a wired Ethernet IP connection way.

Based on the above SN-Smallcell architecture, combination of multiple cells is implemented for multiple Smallcell NodeBs; first, public resource establishment is performed, and after receiving a cell establishment request of the RNC, the SN sends a cell establishment request message (including the same frequency point resource and the same cell scrambling code) and a public transmission channel establishment request message to multiple Smallcell NodeBs connected with the SN, so as to thereby establish an intra-frequency logic cell, specifically, which Smallcell NodeBs corresponding to one intra-frequency logic cell are determined local configuration data of the SN.

Step S102: in the logic NodeB, a position of the Smallcell in which the UE is located is judged according to an access request initiated by the UE and a radio link establishment request sent by the RNC, or according to feedback information of each Smallcell NodeB, and a radio link between the SN and a corresponding Smallcell NodeB established.

In the above SN-Smallcell architecture, if a certain UE sends the access request through a certain Smallcell NodeB, after the RNC receives and permits the access request, the RNC may initiate a radio link establishment procedure to the SN; after the SN receives the radio link establishment request, the SN may initiate a radio link establishment request message to a corresponding Smallcell NodeB, to establish a corresponding transmission channel and physical channel; an internal logic process of this call establishment process between the SN and the Smallcell NodeB is substantially identical to that inside a traditional macro station.

Subsequently, each UE then performs data transmission and enjoys a resource service based on the established radio link between the Smallcell NodeB and the SN.

Step S103: data transmission is performed on the intra-frequency logic cell based on the radio link.

With reference to Fig. 4, Fig. 4 is a diagram of an internal function module of the SN in this embodiment. In this embodiment the followings are further provided in the SN: a Selection Combining (SC) module, a downlink data distribution module, an HS-PDSCH code channel resource management module, and a mobility management module configured to manage a terminal covered by multiple Smallcell NodeBs in the same intra-frequency logic cell.

Wherein, the SC module implements transmission of the same UE data to uplink data of multiple Smallcell NodeBs to perform selective combination, that is multiple Smallcell NodeB uplink DCH, E-DCH data frames from the same intra-frequency logic cell are selectively combined and transmitted to the RNC.

The downlink data distribution module implements distribution of the downlink data transmitted to the same UE from the RNC to multiple Smallcell NodeBs belonging to the same intra-frequency logic cell.

Thereby the data transmission performed on the intra-frequency logic cell is implemented through the SC module and the downlink data distribution module.

The above mobility management module is configured to perform mobility management on the terminal covered by multiple Smallcell NodeBs in the same intra-frequency logic cell, and implementation of this mobility management module is a basis of HS-DPDCH code resource multiplexing, HS-DPDCH code resource multiplexing of different Smallcell coverage areas in the same logic cell can be implemented only when an area covered by the Smallcell NodeB in which the UE is located is identified.

With regard to the UE in two or multiple Smallcell NodeB overlapping areas in the same logic cell, if these UEs are a non-HSDPA service, then two or more Smallcell NodeBs needs to have a radio connection with the UE of a main overlapping area; with regard to the UE in the overlapping area, that is to receive a radio signal from multiple Smallcells, and these radio connections are just completely identical radio connections.

With regard to the UE in two or multiple Smallcell NodeB overlapping areas in the same logic cell, if these UEs are an HSDPA service, only one Smallcell NodeB cell is in charge of scheduling the HSDPA service of the UE in these overlapping areas; that is, with regard to a terminal HSDPA service of multiple Smallcell NodeB overlapping coverage areas belonging to the same logic cell, the UE only receives an HSDPA data stream of one Smallcell; with reference to Fig. 5, Fig. 5 is a service connection relationship diagram of an HSDPA user in multiple Smallcell NodeBs (belonging to the same logic cell). Wherein, the UE in the overlapping area (shadow area) has a service connection with only one Smallcell NodeB.

The SN notifies all Smallcell NodeBs corresponding to a certain intra-frequency logic cell of "NodeB Communication Context", "UL DPCH Uplink Scrambling Code", and "UL DPCCH Slot Format" information of all UEs in the current intra-frequency logic cell, the timing search module of a corresponding Smallcell NodeB may search according to information of these terminals, to mainly determine whether an SIR value of an uplink UL_DPCCH Pilot signal meets a requirement or not so as to determine whether a certain terminal UE is searched; once the Smallcell NodeB searches a certain UE or UEs, the Smallcell may feed "NodeB Communication Context" back to the terminal UE corresponding to the SN, and then the SN initiates a radio link establishment procedure to this Smallcell (copying a radio link establishment procedure message originally initiated to other Smallcells), this Smallcell establishes a corresponding transmission channel and physical channel (seen from the SN, equivalently creating another radio link).

A certain Smallcell NodeB detects a SIR value of a UL_DPCCH Pilot signal of the terminal in this cell, once the SIR value of the uplink UL_DPCCH Pilot signal does not meet the requirement, the Smallcell NodeB may feed "NodeB Communication Context" back to the terminal UE corresponding to the SN, and then the SN initiates a radio link deletion procedure to this Smallcell NodeB, this Smallcell NodeB deletes the corresponding transmission channel and physical channel (seen from the SN, equivalently deleting one radio link).

The above code channel resource management module configured to judge whether the UE is in a Smallcell overlapping coverage area or not according to feedback information of each Smallcell NodeB, and multiplexes a non-Smallcell overlapping coverage area HS-DPDCH code resource according to a judgement result.

Specifically, the SN manages a Smallcell NodeB overlapping area HS-PDSCH code resource in the same intra-frequency logic cell, and timely notifies all Smallcell NodeBs mapped to this intra-frequency logic cell.

The SN knows whether the UE is in a Smallcell NodeB overlapping coverage area or in a non-Smallcell NodeB overlapping coverage area through a situation fed back by each Smallcell NodeB. With regard to one HSDPA cell, a downlink code resource thereof is limited (generally 15 maximum HS-DPDCH code resources), because the embodiment of the disclosure implements cell combination with multiple Smallcell NodeBs, multiple intra-frequency physical cells are mapped into one logic cell; in order to improve user downlink data experience covered by each Smallcell NodeB to a maximum extent, this embodiment provides a management solution of HS-DPDCH code resource multiplexing; with regard to the same intra-frequency logic cell, the HS-DPDCH code resource needed to be managed include two kinds of resources: a Smallcell overlapping area HS-PDSCH code resource and each Smallcell non-overlapping area HS-PDSCH code resource, wherein the Smallcell non-overlapping area HS-PDSCH code resource may be multiplexed.

With reference to Fig. 6a, Fig. 6a is an internal structure diagram of a Smallcell NodeB in this embodiment, all Smallcells in this embodiment include a timing search module of a timing search terminal (UL_DPCCH Scrambling code scan & Pilot SIR Evaluation) and a high-accuracy time synchronization module, wherein:
With regard to the timing search module, all Smallcell NodeBs not only search the terminal UE covered by this Smallcell NodeB, but also search the terminal UE not belonging to this Smallcell NodeB but belonging to the same logic cell; a purpose of the search is to timely judge whether the terminal UE belonging to the same cell enters this Smallcell NodeB coverage range. An area covered by the two or more Smallcell NodeBs to which the UE simultaneously belongs is remarked as a "Smallcell overlapping area", and the area covered by only one Smallcell NodeB to which the UE belongs is remarked as the "Smallcell non-overlapping area", a timing search module process is referred in Fig. 6b.

With regard to the high-accuracy time synchronization module, because the embodiment of the disclosure will implement combination of multiple Smallcells, and because physical layer baseband processing of multiple Smallcell NodeBs in the same intra-frequency logic cell is separated, in order to avoid interference of multiple Smallcell NodeBs on the user, clocks between multiple Smallcell NodeBs in the same intra-frequency logic cell must be highly synchronized, therefore, the embodiment of the disclosure needs to configure the high-accuracy time synchronization module; this high-accuracy time synchronization module guarantees that all Smallcell NodeB clocks in the same intra-frequency logic cell synchronously send a signal, a difference of transmission time of different Smallcell NodeBs is smaller than 1/4Chip (1/4*1/3.8M=65ns), with reference to a time difference requirement of transmitting diversity in 3GPP TS 25.104 6.8.4 Time alignment error in Tx Diversity.

An HS-PDSCH code channel resource multiplexing procedure of the same intra-frequency logic cell of the embodiment is explained in detail below:
The Smallcell NodeB processes belonging UE uplink and downlink data, and with regard to an R99 service, a used downlink code resource is still assigned by the RNC.

With regard to an HSDPA service, "the UE in the Smallcell overlapping area" and "the UE in the Smallcell non-overlapping area" need to be treated distinctively during a shared physical channel HS-PDSCH code channel scheduling. With regard to "the UE in the Smallcell overlapping area", an overlapping area HS-PDSCH code channel resource is used; with regard to all "the UEs in the Smallcell non-overlapping area", the used HS-PDSCH code channel resource is an HS-DPDCH code channel amount allocated to the intra-frequency logic cell by the RNC, so it may be implemented that a non-overlapping area of each Smallcell NodeB can multiplex the same HS-PDSCH code channel resource.

In order to explain HS-PDSCH code channel multiplexing in a situation that multiple Smallcells are combined into one intra-frequency logic cell, an example is provided for explanation below in combination with Fig. 4, Fig. 5, Fig. 7 and Fig. 8.

Fig. 4 is a diagram of an internal function module of the SN in this embodiment; Fig. 5 is a service connection relationship diagram of an HSDPA user in multiple Smallcell NodeBs (belonging to the same logic cell); Fig. 7 is a management allocation diagram of 10 HS-PDSCH code channels of the same logic cell in two Smallcell NodeBs; Fig. 8 is a diagram of a situation that the HS-PDSCH code channel resource is multiplexed and scheduled in two Smallcell NodeBs based on the situation shown in Fig. 5 as an example that 2 Smallcells are combined into one intra-frequency logic cell.

Fig. 5 shows that a Smallcell 1 and a Smallcell 2 are two adjacent Smallcell NodeBs; "the code channel resource management module" contained in the SN in Fig. 4 is used to allocate the HS-PDSCH code channel resource scheduled by Smallcell 1 and Smallcell 2; the intra-frequency cells of the two Smallcell NodeBs are integrated into one logic cell, wherein the Smallcell 1 NodeB is an HS-DSCH service physical cell of UE 1, UE 2, UE 5 and UE 7; the Smallcell 2 NodeB is the HS-DSCH service physical cell of UE 3, UE 4, UE 6 and UE 8; UE 2 and UE 3 are in a coverage overlapping area range of Smallcell 1 and Smallcell 2. The HS-PDSCH code channel resources scheduled and used by UE 2 and UE 3 cannot be the same, thus in the situation that the SN determines a certain UE as an overlapping area, the SN needs to timely notify all Smallcell NodeBs in this intra-frequency logic cell of that an overlapping area HSDPA user is needed to be configured with different HS-PDSCH code channel resources (it needs to point out different code channels and code channel amounts).

Both UE 2 and UE 3 are an HSDPA user of the overlapping area, and Smallcell 1 and Smallcell 2 are separately the HS-DSCH service physical cells of UE 2 and UE 3, but belong to the same intra-frequency logic cell; therefore for downlink distinguishment of different users in the overlapping area, HS-PDSH code channel data of UE 2 and UE 3 cannot be the same; the HS-PDSCH code channels configured for the user in the overlapping area by Smallcell 1 are code channel 1 and code channel 2; the HS-PDSCH code channels configured for the user in the overlapping area by Smallcell 2 are code channel 3 and code channel 4; this function is completed by the code channel resource management module in Fig. 4.

UE 1, UE 5, and UE 7 are the HSDPA user in the non-overlapping coverage area of Smallcell 1; UE 4, UE 6 and UE 8 are the HSDPA user in the non-overlapping coverage area of Smallcell 2; because the non-overlapping coverage area of Smallcell 1 does not overlap the non-overlapping coverage area of Smallcell 2, then a possibility of implementing multiplexing of the HS-PDSCH code channel resource exists. Taking 10 HS-PDSCH code channel resources (code channel 1-10) configured for this intra-frequency logic cell by the RNC as an example, seen from Fig. 7 and Fig. 8, in Smallcell#1, the code channels 1 and 2 adopt a time division multiplexing way in the overlapping area and the non-overlapping area for scheduling, and in Smallcell#2, the code channels 3 and 4 adopt a time division multiplexing way in the overlapping area and the non-overlapping area for scheduling. 10 HS-PDSCH code channels in one cell combined from 2 Smallcells may use the following HS-PDSCH code channel amount: 2+6+2+6=16 (Smallcell 1: the code channels 1 and 2 and the code channels 5-10; Smallcell 2: the code channels 3 and 4 and the code channels 5-10); when no user is in the overlapping area, the SN notifies of that all Smallcell NodeBs may multiplex and distribute all HS-PDSCH code channels of the logic cell.

In order to make the Smallcell to schedule the HSDPA user in this coverage area, it needs to configure different HS-SCCH control channels for multiple Smallcells of the same logic cell; for example, Smallcell 1 configures three HS-SCCH channels, Smallcell 2 also configures another three HS-SCCHs, and HS-SCCH code channels of the two Smallcells are different, with reference to Fig. 8.

In addition, with regard to mobility management of the terminal of the non-HSDPA user covered by multiple Smallcell NodeBs of the same intra-frequency logic cell, implementation of the mobility management is implemented based on cooperation of the mobility management module of the SN and the timing search module of the Smallcell NodeB, a specific procedure is implemented as below:
The SN notifies all Smallcell NodeBs corresponding to a certain intra-frequency logic cell of "NodeB Communication Context", "UL DPCH Uplink Scrambling Code" and "UL DPCCH Slot Format" information of all UEs in the current intra-frequency logic cell, and the timing search module of the corresponding Smallcell NodeB may then perform search according to the information of these terminals; with reference to Fig. 5, it mainly determines whether the SIR value of the uplink UL_DPCCH Pilot signal is greater than a preset threshold (coverage threshold) to judge whether a certain terminal UE is searched; once the Smallcell NodeB searches out a certain UE or UEs, the Smallcell may feed "NodeB Communication Context" back to the terminal UE corresponding to the SN.

Then the SN initiates a radio link establishment procedure to this Smallcell NodeB (copying a radio link establishment procedure message initiated originally to other Smallcell NodeBs), this Smallcell NodeB establishes the corresponding transmission channel and physical channel (seen from the SN, equivalently creating another radio link), with reference to Fig. 9, Fig. 9 is a service connection relationship diagram of the non-HSDPA user in multiple Smallcell NodeBs (belonging to the same logic cell), wherein UE 2 simultaneously receives the downlink signal of multiple Smallcell NodeBs (the same downlink signal); UE 1 and UE 3 separately receive the downlink signal of Smallcell 1 NodeB and Smallcell 2 NodeB.

A certain Smallcell NodeB detects the SIR value of the UL_DPCCH Pilot signal of the terminal in this cell, and once the SIR value of the uplink UL_DPCCH Pilot signal is lower than the preset threshold (coverage threshold), the Smallcell NodeB may feed "NodeB Communication Context" back to the terminal UE corresponding to the SN, then the SN initiates a radio link deletion procedure to this Smallcell NodeB, and this Smallcell NodeB deletes the corresponding transmission channel and physical channel (seen from the SN, equivalently deleting one radio link).

With regard to the non-HSDPA user in the overlapping area, the uplink service may be sent to the SN through two different Smallcell NodeBs; an SC module in the SN performs selective combination processing on multiple Smallcell NodeB uplink DCH, E-DCH data frames belonging to the same logic cell, and then transmits to the RNC. A downlink service is copied and sent by a downlink data distribution module of the SN to the covered Smallcell NodeB to which this UE belongs, with reference to Fig. 4.

This embodiment, through the above scheme, implements deploying and opening multiple Smallcell NodeBs or expansion in the same Macrocell, avoids RNC expansion caused by plenty of Smallcell NodeB applications, and effectively avoids occurrence of a soft handover between plenty of Smallcells and the occurrence of an lur soft handover across the RNC between a Macrocell and a Smallcell, thus avoids lowered user experience brought thereby, and simultaneously reduces lub transmission pressure and lur transmission pressure; in addition, the embodiment of the disclosure combines multiple cells into one intra-frequency logic cell, simultaneously further implements search perception of the Smallcell NodeB coverage area belonging to the UE in the same intra-frequency logic cell, thus implements multiplexing of the HS-PDSCH code channel resource of different coverage areas of multiple Smallcell NodeBs, and improves throughput of the overall intra-frequency logic cell.

As shown in Fig. 10, another embodiment of the disclosure provides a method for performing cell combination based on multiple Smallcell NodeBs, and based on the above embodiment, after the above step S103, the method further includes:
Step S104: an HSDPA service handover of the UE between multiple Smallcell NodeBs is performed.

The difference between this embodiment and the above embodiment is, this embodiment can also implement terminal HSDPA service and Smallcell service NodeB change procedure (similar to a service cell change procedure between HSDPA intra-frequency cells) through the mobility management module, and this function is completed based on cooperation of the mobility management module of the SN and the timing search module of the Smallcell NodeB.

Specifically, as shown in Fig. 11, the step S104, the steps of performing the HSDPA service handover of the UE between multiple Smallcell NodeBs include:
Step S1041: the SN receives the SIR value of the UL_DPCCH Pilot signal of the UE reported by multiple Smallcell NodeBs in the same logic cell.
Step S1042: various SIR values are compared, to acquire a maximum SIR value thereof.
Step S1043: if the maximum SIR value is sustained for a preset time, then whether the Smallcell NodeB corresponding to this maximum SIR value is identical to the Smallcell NodeB of a current UE serviced or not is judged.
Step S1044: if the two Smallcell NodeBs are not identical, then an HS-PDSCH is scheduled in the Smallcell NodeB corresponding to this maximum SIR value, to send HSDPA data to this UE.
Step S1045: if the two Smallcell NodeBs are identical, then a current service Smallcell NodeB state is continuously maintained.

More specifically, in order to implement the HSDPA service handover of the terminal between multiple Smallcell NodeBs, with regard to the UE in two or more Smallcell overlapping areas of the same intra-frequency logic cell, the SN determines on which Smallcell NodeB can the HS-PDSCH physical channel be scheduled for this UE, according to comparison of the SIR value of the UL_DPCCH Pilot signal reported by multiple Smallcell NodeBs in the same intra-frequency logic cell. If the SIR value of the UL_DPCCH Pilot signal of a certain UE reported from a certain Smallcell NodeB is maximum, and is sustained for a period of time (this time parameter is configurable), and this Smallcell NodeB is different from the Smallcell NodeB of this current UE service, then the SN may determine to send the HSDPA data to this terminal UE in the HS-PDSCH physical channel scheduled in this Smallcell NodeB, and other Smallcell NodeBs in the same intra-frequency logic cell then cannot schedule the HS-PDSCH physical to service this UE; if this Smallcell NodeB is the same as the Smallcell NodeB serviced by this current UE, then a currently served Smallcell NodeB state is continuously sustained.

Compared with the related art, this embodiment has the following advantages:
1) multiple Smallcell NodeBs may be uniformly deployed centrally, a transmission connection is not needed to be established for each Smallcell NodeB at an RNC side; the transmission connection is only needed to be implemented automatically inside a NodeB side, to reduce an RNC configuration workload caused by hotspot expansion to a maximum extent; it is much more beneficial to deploy and open multiple Smallcell NodeBs and expand a Smallcell NodeB hotspot in the same Macrocell during project implementation;
2) an RNC amount is greatly saved (reducing a NodeB amount of the RNC and a requirement of a cell amount), and rapid expansion of the RNC caused by plenty of Smallcell deployment is avoided;
3) lowered user experience caused by an lub interface soft handover signal between plenty of Smallcells and the occurrence of plenty of the lur soft handover across the RNC between a Smallcell and a Macrocell is avoided, and simultaneously the lub transmission pressure and the lur transmission pressure are reduced;
4) space division multiplexing of the HS-PDSCH code channel resource of the same logic cell in multiple Smallcells is implemented, and downlink throughput of a logic cell in a hotspot block area is improved.

It needs to be explained that, the SN of the embodiment of the disclosure also relates to other processing modules, which specifically include an lub interface user plane processing, MAC-hs/MAC-e, an uplink RAKE multi-path demodulation and symbol level processing, downlink symbol level processing and spreading modulation processing, transceiver processing, power amplifier and duplex filtering, and other modules. The embodiment of the disclosure implements code division multiplexing in a WCDMA radio system based on an SN-Smallcell architecture, which can be used indoors and outdoors.

As shown in Fig. 12, one embodiment of the disclosure provide an SN for performing cell combination based on multiple Smallcell NodeBs, which includes: a public resource establishment module 201, a link establishment module 202, and a management operation module 203, wherein
the public resource establishment module 201 is configured to establish an intra-frequency logic cell based on a logic NodeB formed by combining multiple Smallcell NodeBs after a cell establishment request of an RNC is received;
wherein, an lub interface control plane and an lub interface user plane of a NodeB are separated and are separately implemented in the SN and the Smallcell NodeB.

The link establishment module 202 is configured to judge a position of a Smallcell in which a UE is located according to an access request initiated by the UE and a radio link establishment request sent by the RNC, or according to feedback information of each Smallcell NodeB, in the logic NodeB, and to establish a radio link between the SN and a corresponding Smallcell NodeB; and
the management operation module 203 is configured to perform data transmission on the intra-frequency logic cell based on the radio link.

Specifically, as shown in Fig. 13, the management operation module 203 includes: an SC module 2031, a downlink data distribution module 2032, a mobility management module 2033, and a code channel resource management module 2034, wherein
the SC module 2031 is configured to combine selectively and send multiple Smallcell NodeB uplink DCH and E-DCH data frames from the same intra-frequency logic cell to the RNC based on a corresponding radio link;
the downlink data distribution module 2032 is configured to distribute downlink data transmitted to the same UE from the RNC to multiple Smallcell NodeBs belonging to the same intra-frequency logic cell.

The mobility management module 2033 is configured to performing mobility management on a terminal covered by multiple Smallcell NodeBs in the same intra-frequency logic cell based on a corresponding radio link;
the code channel resource management module 2034 is configured to judge whether the UE is in a Smallcell overlapping coverage area or not according to the feedback information of each Smallcell NodeB; and to perform multiplexing on an HS-DPDCH code resource in the Smallcell overlapping coverage area according to a judgment result.

Wherein, the public resource establishment module 201, the link establishment module 202, and the management operation module 203 and a sub-module thereof in the SN, in an actual application, may be implemented by a Central Processing Unit (CPU), a Digital Signal Processor (DSP), or a Field-Programmable Gate Array (FPGA) in the SN.

More specifically, what provided by the embodiment of the disclosure is that at a Smallcell small power NodeB side, multiple Smallcell NodeBs are combined into a logic NodeB, and multiple intra-frequency Smallcells are combined into an intra-frequency logic cell; this method separates baseband processing and signal processing of the NodeB; with reference to Fig. 2-1 and Fig. 2-2, multiple Smallcell NodeBs are connected with the RNC through the SN; seen from an RNC side, multiple Smallcell NodeBs belong to one logic NodeB; seen from an RNC processing resource, the intra-frequency physical cells of multiple Smallcells seems to be one intra-frequency logic cell, and the RNC processing resource needed to be reserved by this logic cell is substantially equivalent to the RNC processing resource needed to be reserved by a traditional Macrocell, therefore in a project this solution benefit deploying and opening multiple Smallcell NodeBs or expansion in the same Macrocell.

This embodiment separates the lub interface control plane and the user plane of the NodeB (with reference to Fig. 2-1), and separately implemented in the SN and the Smallcell NodeB; the lub interface control plane is implemented in the SN , and the lub interface user plane is implemented in the Smallcell; in addition, the Smallcell NodeB also implements baseband processing and radio frequency processing of user plane data; separation of the SN and the Smallcell embodied in separation of the control plane and the user plane of the lub interface, thus an interaction interface between the SN and the Smallcell becomes a low speed interface relationship, a traditional microwave of a low cost WLAN may be adopted as a transmission means between the SN and the Smallcell NodeB, because adopting low cost transmission deployment is one of key factors of rapid deployment of plenty of Smallcell NodeBs. Relative to a traditional BBU+RRU architecture which adopts an optical fibre for transmission, the SN-Smallcell architecture can effectively avoid a problem that an actual network deployment optical fibre resource is inadequate or deploying the optical fibre brings a higher networking cost, and low cost WLAN or microwave transmission may be adopted.

Specifically, a deployment scheme of the SN may be in the followings:
As shown in Fig. 2-2, Fig. 2-2 is a first deployment form of the SN in a Smallcell solution; wherein, the SN and the macro NodeB are deployed separately, combination of multiple intra-frequency physical Smallcells into one intra-frequency logic cell is implemented by the SN, and in addition combination of multiple Smallcell NodeBs is also implemented; seen from the RNC side, all Smallcells may be one logic cell, to facilitate overall rapid deployment and expansion of multiple Smallcell NodeBs. In Fig. 2-2, the Smallcell may be selectively configured with a Wifi function as required.
As shown in Fig. 2-3, Fig. 2-3 is a second deployment form of the SN in the Smallcell solution; wherein, an SN function is integrated into a certain Macro NodeB function; seen from the RNC side, this Macro NodeB and all connected Smallcell NodeBs may be one heterogeneous logic NodeB. In Fig. 2-3, the Smallcell may be selectively configured with the Wifi function as required.
As shown in Fig. 2-4, Fig. 2-4 is a third deployment form of the SN in the Smallcell solution; wherein, the SN function is integrated into the BBU of a certain BBU-RRU distributed NodeB; seen from the RNC side, this BBU and all connected Smallcell NodeBs may be one heterogeneous logic NodeB. In Fig. 2-4, the Smallcell may be selectively configured with the Wifi function as required.

In various logic NodeBs, the SN and the RNC are connected through an lub interface, identical to the related art, which implements a NBAP function of a Radio Network Layer at a NodeB side of the lub interface through an lub control plane module, and obeys a 3GPP TS 25.433R99/R5/R6/R7/R8/R9/R10 protocol. This lub control plane module centrally processes an lub control plane signal of all Smallcell NodeBs connected with this SN, and seen from the RNC side, all Smallcell NodeBs connected with this SN belong to one logic NodeB.

The connection ways between the SN and various Smallcell NodeBs, specifically may include but may not be limited to the followings:
As shown in Fig. 3-1, Fig. 3-1 shows the connection between the SN and multiple Smallcell NodeBs adopts a star connection way of microwave transmission, wherein a microwave IDU is integrated into the SN.
As shown in Fig. 3-2, Fig. 3-2 shows the connection between the SN and multiple Smallcell NodeBs adopts the star connection way of microwave transmission, wherein the microwave IDU is not integrated into the SN.
As shown in Fig. 3-3, Fig. 3-3 shows the connection between the SN and multiple Smallcell NodeBs adopts a star connection way of Wlan802.11a/g/n/ac.
As shown in Fig. 3-4, Fig. 3-4 shows the connection between the SN and multiple Smallcell NodeBs adopts a Mesh networking connection way of Wlan802.11a/g/n/ac.
As shown in Fig. 3-5, Fig. 3-5 shows the connection between the SN and multiple Smallcell NodeBs adopts a wired Ethernet IP connection way.

Based on the above SN-Smallcell architecture, combination of multiple cells is implemented aiming at multiple Smallcell NodeBs; first, public resource establishment is performed, after receiving a cell establishment request of the RNC, the SN sends a cell establishment request message (containing the same frequency point resource and the same cell scrambling code) and a public transmission channel establishment request message to multiple Smallcell NodeBs connected with the SN, thereby establishes the intra-frequency logic cell; specifically which Smallcell NodeBs corresponds to one intra-frequency logic cell is determined by local configuration data of the SN.

In the above SN-Smallcell architecture, if a certain UE initiates an access request through a certain Smallcell NodeB, after receiving and permitting the access request, the RNC may initiates a radio link establishment procedure to the SN, after the SN receives the radio link establishment request, may initiate a radio link establishment request message to a corresponding Smallcell NodeB, to establish corresponding transmission channel and physical channel; during this call establishment procedure, an internal logic process between the SN and the Smallcell NodeBs is substantially identical to that inside a traditional macro NodeB.

Subsequently, each UE then performs data transmission and enjoys a resource service based on the established radio link between the Smallcell NodeB and the SN.

In this embodiment the followings are further provided in the SN: an SC module 2031, a downlink data distribution module 2032, a code channel resource management module 2034, and a mobility management module 2033 configured to manage a terminal covered by multiple Smallcell NodeBs in the same intra-frequency logic cell (probably with reference to an internal structure block diagram of the SN in Fig. 4).

Wherein, the SC module 2031 implements transmission of the same UE data to uplink data of multiple Smallcell NodeBs to perform selective combination, that is multiple Smallcell NodeB uplink DCH, E-DCH data frame from the same intra-frequency logic cell is selectively combined and sent to the RNC.

The downlink data distribution module 2032 implements distribution of the downlink data transmitted to the same UE from the RNC to multiple Smallcell NodeBs belonging to the same intra-frequency logic cell.

Thereby the data transmission performed on the intra-frequency logic cell is implemented through the SC module 2031 and the downlink data distribution module 2032.

The above mobility management module 2033 is configured to perform mobility management on the terminal covered by multiple Smallcell NodeBs in the same intra-frequency logic cell, and implementation of this mobility management module 2033 is a basis of HS-DPDCH code resource multiplexing, and the HS-DPDCH code resource multiplexing of different Smallcell coverage areas in the same logic cell can be implemented only when an area covered by the Smallcell NodeB in which the UE is located is identified.

With regard to the UE in two or multiple Smallcell NodeB overlapping areas in the same logic cell, if these UEs are a non-HSDPA service, then two or more Smallcell NodeBs needs to have the radio connection with the UE of a main overlapping area; with regard to the UE in the overlapping area, that is to receive a radio signal from multiple Smallcells, and these radio connections are just completely identical radio connections.

With regard to the UE in two or multiple Smallcell NodeB overlapping areas in the same logic cell, if these UEs are the HSDPA service, only one Smallcell NodeB cell is in charge of scheduling the HSDPA service of the UE in these overlapping areas; that is, with regard to a terminal HSDPA of multiple Smallcell NodeB overlapping coverage areas belonging to the same logic cell, the UE only receives an HSDPA data stream of one Smallcell; with reference to Fig. 5, Fig. 5 is a service connection relationship diagram of an HSDPA user in multiple Smallcell NodeBs (belonging to the same logic cell). Wherein, the UE in an overlapping area (shadow area) has a service connection with only one Smallcell NodeB.

The SN notifies all Smallcell NodeBs corresponding to a certain intra-frequency logic cell of "NodeB Communication Context", "UL DPCH Uplink Scrambling Code", and "UL DPCCH Slot Format" information of all UEs in the current intra-frequency logic cell, the timing search module of a corresponding Smallcell NodeB may search according to information of these terminals, to mainly determine whether a SIR value of an uplink UL_DPCCH Pilot signal meets a requirement or not so as to determine whether a certain terminal UE is searched; once the Smallcell NodeB searches a certain UE or UEs, the Smallcell may feed "NodeB Communication Context" back to the terminal UE corresponding to the SN, and then the SN initiates a radio link establishment procedure to this Smallcell (copying a radio link establishment procedure message originally initiated to other Smallcells), this Smallcell establishes a corresponding transmission channel and physical channel (seen from the SN, equivalently creating another radio link).

A certain Smallcell NodeB detects a SIR value of a UL_DPCCH Pilot signal of the terminal in this cell, once the SIR value of the uplink UL_DPCCH Pilot signal does not meet the requirement, the Smallcell NodeB may feed "NodeB Communication Context" back to the terminal UE corresponding to the SN, and then the SN initiates a radio link deletion procedure to this Smallcell NodeB, this Smallcell NodeB deletes the corresponding transmission channel and physical channel (seen from the SN, equivalently deleting one radio link).

The above code channel resource management module 2034 is configured to judge whether the UE is in a Smallcell overlapping coverage area or not according to feedback information of each Smallcell NodeB, and to multiplex a non-Smallcell overlapping coverage area HS-DPDCH code resource according to a judgement result.

Specifically, the SN manages a Smallcell NodeB overlapping area HS-PDSCH code resource in the same intra-frequency logic cell, and timely notifies all Smallcell NodeB mapped to this intra-frequency logic cell.

The SN knows whether the UE is in a Smallcell NodeB overlapping coverage area or in a non-Smallcell NodeB overlapping coverage area through a situation fed back by each Smallcell NodeB. With regard to one HSDPA cell, a downlink code resource thereof is limited (generally 15 maximum HS-DPDCH code resources), because the embodiment of the disclosure implements cell combination with multiple Smallcell NodeBs, multiple intra-frequency physical cells are mapped into one logic cell; in order to improve user downlink data experience covered by each Smallcell NodeB to a maximum extend, the embodiment provides a management solution of HS-DPDCH code resource multiplexing; with regard to the same intra-frequency logic cell, the HS-DPDCH code resource needed to be managed includes two kinds of resources: a Smallcell overlapping area HS-PDSCH code resource and each Smallcell non-overlapping area HS-PDSCH code resource, wherein the Smallcell non-overlapping area HS-PDSCH code resource may be multiplexed.

The above SC module 2031, downlink data distribution module 2032, code channel resource management module 2034, and mobility management module 2033 in the SN, in actual application, may be implemented by the CPU, or the DSP, or the FPGA in the SN.

With reference to Fig. 6a, Fig. 6a is an internal structure diagram of a Smallcell NodeB in this embodiment; in this embodiment all Smallcell NodeBs include a timing search module of a timing search terminal and a high-accuracy time synchronization module, wherein

With regard to the timing search module, all Smallcell NodeBs not only search the terminal UE covered by this Smallcell NodeB, but also search the terminal UE not belonging to this Smallcell NodeB but belonging to the same logic cell; a purpose of the search is to timely judge whether the terminal UE belonging to the same cell enters this Smallcell NodeB coverage range. An area covered by the two or more Smallcell NodeBs to which the UE simultaneously belongs, is remarked as a "Smallcell overlapping area", and the area covered by only one Smallcell NodeB to which the UE belongs, is remarked as the "Smallcell non-overlapping area", a timing search module process is referred in Fig. 6b.

With regard to the high-accuracy time synchronization module, because the embodiment of the disclosure will implement combination of multiple Smallcells, and because physical layer baseband processing of multiple Smallcell NodeBs in the same intra-frequency logic cell is separated, in order to avoid interference of multiple Smallcell NodeBs on the user, clocks between multiple Smallcell NodeBs in the same intra-frequency logic cell must be highly synchronized, therefore, the embodiment of the disclosure needs to configure the high-accuracy time synchronization module; this high-accuracy time synchronization module guarantees that all Smallcell NodeB clocks in the same intra-frequency logic cell synchronously send a signal, a difference of transmission time of different Smallcell NodeBs is smaller than 1/4Chip (1/4*1/3.8M=65ns), with reference to a time difference requirement of transmitting diversity in 3GPP TS 25.104 6.8.4 Time alignment error in Tx Diversity.

The HS-PDSCH code channel resource multiplexing procedure of the same intra-frequency logic cell of this embodiment is explained in detail below:
The Smallcell NodeB processes belonging UE uplink and downlink data, with regard to an R99 service, a used downlink code resource is still assigned by the RNC.

With regard to an HSDPA service, "the UE in the Smallcell overlapping area" and "the UE in the Smallcell non-overlapping area" need to be treated distinctively during a shared physical channel HS-PDSCH code channel scheduling. With regard to "the UE in the Smallcell overlapping area", an overlapping area HS-PDSCH code channel resource is used; with regard to all "the UEs in the Smallcell non-overlapping area", the used HS-PDSCH code channel resource is an HS-DPDCH code channel amount allocated to the intra-frequency logic cell by the RNC, so it may be implemented that a non-overlapping area of each Smallcell NodeB can multiplex the same HS-PDSCH code channel resource.

In order to explain HS-PDSCH code channel multiplexing in a situation that multiple Smallcells are combined into one intra-frequency logic cell, an example is provided for explanation below in combination with Fig. 4, Fig. 5, Fig. 7 and Fig. 8.

Fig. 4 is a diagram of an internal function module of the SN in this embodiment; Fig. 5 is a service connection relationship diagram of an HSDPA user in multiple Smallcell NodeBs (belonging to the same logic cell); Fig. 7 is a management allocation diagram of 10 HS-PDSCH code channels of the same logic cell in two Smallcell NodeBs; Fig. 8 is diagram of a situation that the HS-PDSCH code channel resource is multiplexed and scheduled in two Smallcell NodeBs based on the situation shown in Fig. 5 as an example that 2 Smallcells are combined into one intra-frequency logic cell.

Fig. 5 shows that a Smallcell 1 and a Smallcell 2 are two adjacent Smallcell NodeBs; the code channel resource management module 2034 contained in the SN in Fig. 4 is used to allocate the HS-PDSCH code channel resource scheduled by Smallcell 1 and Smallcell 2; the intra-frequency cells of the two Smallcell NodeBs are integrated into one logic cell, wherein the Smallcell 1 NodeB is an HS-DSCH service physical cell of UE 1, UE 2, UE 5 and UE 7; the Smallcell 2 NodeB is the HS-DSCH service physical cell of UE 3, UE 4, UE 6 and UE 8; UE 2 and UE 3 are in a coverage overlapping area range of Smallcell 1 and Smallcell 2. The HS-PDSCH code channel resources scheduled and used by UE 2 and UE 3 cannot be the same, thus in the situation that the SN determines a certain UE as an overlapping area, the SN needs to timely notify all Smallcell NodeBs in this intra-frequency logic cell of that an overlapping area HSDPA user is needed to be configured with different HS-PDSCH code channel resources (it needs to point out different code channels and code channel amounts).

Both UE 2 and UE 3 are an HSDPA user of the overlapping area, and Smallcell 1 and Smallcell 2 are separately the HS-DSCH service physical cells of UE 2 and UE 3, but belong to the same intra-frequency logic cell; therefore for downlink distinguishment of different users in the overlapping area, HS-PDSH code channel data of UE 2 and UE 3 cannot be indentical; the HS-PDSCH code channels configured for the user in the overlapping area by Smallcell 1 are code channel 1 and code channel 2; the HS-PDSCH code channels configured for the user in the overlapping area by Smallcell 2 are code channel 3 and code channel 4; this function is completed by the code channel resource management module 2034 in Fig. 4.

UE 1, UE 5, and UE 7 are the HSDPA user in the non-overlapping coverage area of Smallcell 1; UE 4, UE 6 and UE 8 are the HSDPA user in the non-overlapping coverage area of Smallcell 2; because the non-overlapping coverage area of Smallcell 1 does not overlap the non-overlapping coverage area of Smallcell 2, then a possibility of implementing multiplexing of the HS-PDSCH code channel resource exists. Taking 10 HS-PDSCH code channel resources (code channels 1-10) configured for this intra-frequency logic cell by the RNC as an example, seen from Fig. 7 and Fig. 8, in Smallcell#1, the code channels 1 and 2 adopt a time division multiplexing way in the overlapping area and the non-overlapping area for scheduling, and in Smallcell#2, the code channels 3 and 4 adopt a time division multiplexing way in the overlapping area and the non-overlapping area for scheduling. 10 HS-PDSCH code channels in one cell combined from 2 Smallcells may use the following HS-PDSCH code channel amount: 2+6+2+6=16 (Smallcell 1: the code channels 1 and 2 and the code channels 5-10; Smallcell 2: the code channels 3 and 4 and the code channels 5-10); when no user is in the overlapping area, the SN notifies of that all Smallcell NodeBs may multiplex and distribute all HS-PDSCH code channels of the logic cell.

In order to make the Smallcell to schedule the HSDPA user in this coverage area, it needs to configure different HS-SCCH control channels for multiple Smallcells of the same logic cell; for example, Smallcell 1 configures three HS-SCCH channels, Smallcell 2 also configures another three HS-SCCHs, and HS-SCCH code channels of the two Smallcells are different, with reference to Fig. 8.

In addition, with regard to mobility management of the terminal of the non-HSDPA user covered by multiple Smallcell NodeBs of the same intra-frequency logic cell, implementation of the mobility management is implemented based on cooperation of the mobility management module 2033 of the SN and the timing search module of the Smallcell NodeB, a specific procedure is implemented as below:
The SN notifies all Smallcell NodeBs corresponding to a certain intra-frequency logic cell of "NodeB Communication Context", "UL DPCH Uplink Scrambling Code" and "UL DPCCH Slot Format" information of all UEs in the current intra-frequency logic cell, and the timing search module of the corresponding Smallcell NodeB may then perform search according to the information of these terminals; with reference to Fig. 5, it mainly determines whether the SIR value of the uplink UL_DPCCH Pilot signal is greater than a preset threshold (coverage threshold) to judge whether a certain terminal UE is searched; once the Smallcell NodeB searches out a certain UE or UEs, the Smallcell may feed "NodeB Communication Context" back to the terminal UE corresponding to the SN.

Then the SN initiates a radio link establishment procedure to this Smallcell NodeB (copying a radio link establishment procedure message initiated originally to other Smallcell NodeBs), this Smallcell NodeB establishes the corresponding transmission channel and physical channel (seen from the SN, equivalently creating another radio link), with reference to Fig. 9, Fig. 9 is a service connection relationship diagram of the non-HSDPA user in multiple Smallcell NodeBs (belonging to the same logic cell), wherein UE 2 simultaneously receives the downlink signal of multiple Smallcell NodeBs (the same downlink signal); UE 1 and UE 3 separately receive the downlink signal of Smallcell 1 NodeB and Smallcell 2 NodeB.

A certain Smallcell NodeB detects the SIR value of the UL_DPCCH Pilot signal of the terminal in this cell, and once the SIR value of the uplink UL_DPCCH Pilot signal is lower than the preset threshold (coverage threshold), the Smallcell NodeB may feed "NodeB Communication Context" back to the terminal UE corresponding to the SN, then the SN initiates a radio link deletion procedure to this Smallcell NodeB, and this Smallcell NodeB deletes the corresponding transmission channel and physical channel (seen from the SN, equivalently deleting one radio link).

With regard to the non-HSDPA user in the overlapping area, the uplink service may be sent to the SN through two different Smallcell NodeBs; an SC module 2031 in the SN performs selective combination processing on multiple Smallcell NodeB uplink DCH, E-DCH data frames belonging to the same logic cell, and then transmits to the RNC. A downlink service is copied and sent by a downlink data distribution module 2032 of the SN to the covered Smallcell NodeB to which this UE belongs, with reference to Fig. 4.

Further, this embodiment may also implement a terminal HSDPA service Smallcell service NodeB change procedure (similar to a service cell change procedure between HSDPA intra-frequency cells) through the mobility management module 2033, and this function is completed based on cooperation of the mobility management module 2033 of the SN and the timing search module of the Smallcell NodeB.

More specifically, in order to implement the HSDPA service handover of the terminal between multiple Smallcell NodeBs, with regard to the UE in two or more Smallcell overlapping areas of the same intra-frequency logic cell, the SN determines on which Smallcell NodeB can the HS-PDSCH physical channel be scheduled for this UE, according to comparison of the SIR value of the UL_DPCCH Pilot signal reported by multiple Smallcell NodeBs in the same intra-frequency logic cell. If the SIR value of the UL_DPCCH Pilot signal of a certain UE reported from a certain Smallcell NodeB is maximum, and is sustained for a period of time (this time parameter is configurable), and this Smallcell NodeB is different from the Smallcell NodeB of this current UE service, then the SN may determine to send the HSDPA data to this terminal UE in the HS-PDSCH physical channel scheduled in this Smallcell NodeB, and other Smallcell NodeBs in the same intra-frequency logic cell then cannot schedule the HS-PDSCH physical to service this UE; if this Smallcell NodeB is the same as the Smallcell NodeB serviced by this current UE, then a currently served Smallcell NodeB state is continuously sustained.

Compared with the related art, this embodiment has the following advantages:
1) multiple Smallcell NodeBs may be uniformly deployed centrally, a transmission connection is not needed to be established for each Smallcell NodeB at an RNC side; the transmission connection is only needed to be implemented automatically inside a NodeB side, to reduce an RNC configuration workload caused by hotspot expansion to a maximum extent; it is much more beneficial to deploy and open multiple Smallcell NodeBs and expand a Smallcell NodeB hotspot in the same Macrocell during project implementation;
2) an RNC amount is greatly saved (reducing a NodeB amount of the RNC and a requirement of a cell amount), and rapid expansion of the RNC caused by plenty of Smallcell deployment is avoided;
3) lowered user experience caused by an lub interface soft handover signal between plenty of Smallcells and the occurrence of plenty of the lur soft handover across the RNC between a Smallcell and a Macrocell is avoided, and simultaneously the lub transmission pressure and the lur transmission pressure are reduced;
4) space division multiplexing of the HS-PDSCH code channel resource of the same logic cell in multiple Smallcells is implemented, and downlink throughput of a logic cell in a hotspot block area is improved.

It needs to be explained that, the SN of the embodiment of the disclosure also relates to other processing modules, which specifically include an lub interface user plane processing, MAC-hs/MAC-e, an uplink RAKE multi-path demodulation and symbol level processing, downlink symbol level processing and spreading modulation processing, transceiver processing, power amplifier and duplex filtering, and other modules. In an actual application, these modules may be implemented by a CPU, or a DSP, or a FPGA in the SN. The embodiment of the disclosure implements code multiplexing in a WCDMA radio system based on an SN-Smallcell architecture, which can be used indoors and outdoors.

As shown in Fig. 14, a preferred embodiment of the disclosure provide an SN for performing cell combination based on multiple Smallcell NodeBs, which includes: a cell establishment module 301, and a link establishment module 302, wherein
the cell establishment module 301 is configured to establish a corresponding intra-frequency logic cell based on a logic NodeB formed by combining multiple Smallcell NodeBs after a cell establishment request message sent by an SN is received; and
the link establishment module 302 is configured to establish a radio link between the Smallcell NodeB and the SN, after the radio link establishment request message initiated by the SN is received, in the logic NodeB. An interaction principle between the Smallcell NodeB and the SN of this embodiment is referred in the above various embodiments, and is not repeated again here.

Wherein, in an actual application the cell establishment module 301 and the link establishment module 302 in the Smallcell NodeB may be implemented by the CPU, or the DSP, or the FPGA in the SN.

As shown in Fig. 15, a preferred embodiment of the disclosure provides a system for performing cell combination based on multiple Smallcell NodeBs, which includes: an SN 401, and multiple Smallcell NodeBs 402, wherein
the SN 401 is configured to establish an intra-frequency logic cell based on a logic NodeB formed by combining multiple Smallcell NodeBs 402 after a cell establishment request of an RNC is received; and to judge a position of a Smallcell in which a UE is located according to an access request initiated by the UE and a radio link establishment request sent by the RNC or according to feedback information of each Smallcell NodeB 402, in the logic NodeB, and to establish a radio link between the SN and a corresponding Smallcell NodeB 402; and
the Smallcell NodeB 402 is configured to establish a corresponding intra-frequency logic cell based on the logic NodeB formed by combining multiple Smallcell NodeBs 402 after the cell establishment request sent by the SN 401 is received; to establish the radio link between the SN 401 and the Smallcell NodeB 402 according to the radio link establishment request initiated by the SN 401, in the logic NodeB;
wherein, an lub interface control plane and an lub interface user plane are separated, and are implemented separately in the SN and the Smallcell NodeB.

An interaction principle between the Smallcell NodeB and the SN of this embodiment is referred in the above various embodiments, and is not repeated again here.

The method, the SN, the Smallcell NodeB, and the system for performing cell combination based on multiple Smallcell NodeBs, which are provided by the embodiment of the disclosure, combines multiple Smallcell NodeBs into a logic NodeB at a NodeB side, and combines multiple intra-frequency Smallcells into an intra-frequency logic cell; an RNC processing resource needed to be reserved by this intra-frequency logic cell is substantially identical to the RNC processing resource needed to be reserved by a traditional Macrocell; this solution facilitates deploying and opening multiple Smallcell NodeBs or expansion in the same Macrocell, also can avoid RNC expansion caused by plenty of Smallcell NodeB applications, and effectively avoids occurrence of a soft handover between plenty of Smallcells and the occurrence of an lur soft handover across the RNC between a Macrocell and a Smallcell, thus avoids lowered user experienced brought thereby, and simultaneously reduces lub transmission pressure and lur transmission pressure; in addition, the embodiment of the disclosure combines multiple cells into one intra-frequency logic cell, simultaneously also implements search perception of a Smallcell NodeB coverage area belonging to the UE in the same intra-frequency logic cell, thus implements multiplexing of the HS-PDSCH code channel resource of different coverage areas of multiple Smallcell NodeBs, and improves throughput of the overall intra-frequency logic cell.

All those described above are only preferred embodiments of the disclosure, and are not therefore used to limit the patent scope of the disclosure; any equivalent structure or process alternation made by employing the description or accompanied drawings of the disclosure, and directly or indirectly applied in the related art thereof, shall be included in the patent protection scope of the disclosure.

## Claims

1. A method for performing cell combination based on multiple Smallcell NodeBs, **characterized in that** the method comprises:
establishing an intra-frequency logic cell based on a logic NodeB formed by combining multiple Smallcell NodeBs, after a Signal NodeB, SN, receives a cell establishment request of a Radio Network Controller, RNC, (S101); wherein, an lub interface control plane of a NodeB is implemented in the SN;
judging a position of a Smallcell in which a User Equipment, UE, is located according to an access request initiated by the UE and a radio link establishment request sent by the RNC or according to feedback information of each Smallcell NodeB, in the logic NodeB, and establishing a radio link between the SN and a corresponding Smallcell NodeB (S102); and
performing data transmission on the intra-frequency logic cell based on the radio link (S103).

2. The method according to claim 1, wherein the establishing the intra-frequency logic cell based on the logic NodeB formed by combining multiple Smallcell NodeBs after the SN receives the cell establishment request of the RNC comprises:
after receiving the cell establishment request of the RNC, sending, by the SN, a cell establishment request message and a public transmission channel establishment request message to multiple Smallcell NodeBs in the logic NodeB, and establishing the intra-frequency logic cell and a public resource thereof.

3. The method according to claim 1, wherein the performing data transmission on the intra-frequency logic cell based on the radio link comprises:
based on a corresponding radio link, combining selectively and sending, by the SN, multiple Smallcell NodeB uplink Dedicated Channel, DCH, and Enhanced Dedicated Channel, E-DCH, data frames from the same intra-frequency logic cell to the RNC; and distributing downlink data transmitted to the same UE from the RNC to multiple Smallcell NodeBs belonging to the same intra-frequency logic cell.

4. The method according to claim 1, wherein the performing resource management on the intra-frequency logic cell based on the radio link comprises:
performing mobility management on a terminal covered by multiple Smallcell NodeBs in the same intra-frequency logic cell based on a corresponding radio link; and
judging whether the UE is in a Smallcell overlapping coverage area or a non-Smallcell overlapping coverage area according to the feedback information of each Smallcell NodeB; and performing multiplexing on a High Speed-Dedicated Physical Data Channel, HS-DPDC, code resource in the non-Smallcell overlapping coverage area according to a judgment result.

5. The method according to claim 1, further comprising: performing a High Speed Downlink Packet Access, HSDPA, service handover of the UE between multiple Smallcell NodeBs.

6. The method according to claim 5, wherein the performing the HSDPA service handover between multiple Smallcell NodeBs comprises:
receiving, by the SN, a Signal to Interference Ratio, SIR, value of a UL_DPCCH Pilot signal of the UE reported by multiple Smallcell NodeBs in the same logic cell;
comparing various SIR values, and acquiring a maximum SIR value thereof;
if the maximum SIR value is sustained for a preset time, then judging whether the Smallcell NodeB corresponding to this maximum SIR value is identical to the Smallcell NodeB of a current UE serviced or not;
if the two Smallcell NodeBs are not identical, then scheduling a High Speed-Physical Downlink Shared Channel, HS-PDSCH, in the Smallcell NodeB corresponding to this maximum SIR value, to send HSDPA data to this UE; and
if the two Smallcell NodeBs are identical, then continuously maintaining a current service Smallcell NodeB state.

7. The method according to claim 1, wherein the SN and a macro NodeB are deployed separately, and the SN and all connected Smallcell NodeBs construct the logic NodeB; or the SN is integrated in the macro NodeB, and the macro NodeB and all connected Smallcell NodeBs construct a heterogeneous logic NodeB; or the SN is integrated in a Baseband Building Unit, BBU, of a BBU-Radio Remote Unit, RRU, distributed NodeB, and the BBU and all connected Smallcells construct the heterogeneous logic NodeB.

8. A Signal NodeB, SN, for performing cell combination based on multiple Smallcell NodeBs, comprising:
a public resource establishment module (201), which is configured to establish an intra-frequency logic cell based on a logic NodeB formed by combining multiple Smallcell NodeBs after a cell establishment request of a Radio Network Controller, RNC, is received; wherein, an lub interface control plane of a NodeB is implemented in the SN;
a link establishment module (202), which is configured to judge a position of a Smallcell in which a User Equipment, UE, is located according to an access request initiated by the UE and a radio link establishment request sent by the RNC or according to feedback information of each Smallcell NodeB, in the logic NodeB, and to establish a radio link between the SN and a corresponding Smallcell NodeB; and
a management operation module (203), which is configured to perform data transmission on the intra-frequency logic cell based on the radio link.

9. The SN according to claim 8, wherein the public resource establishment module (201) is further configured, after the cell establishment request of the RNC is received, to send a cell establishment request message and a public transmission channel establishment request message to multiple Smallcell NodeBs in the logic NodeB, and to establish the intra-frequency logic cell and a public resource thereof.

10. The SN according to claim 8, wherein the management operation module (203) comprises:
a selective combination module (2031), which is configured, based on a corresponding radio link, to combine selectively and send multiple Smallcell NodeB uplink Dedicated Channel, DCH, and Enhanced Dedicated Channel, E-DCH, data frames from the same intra-frequency logic cell to the RNC;
a downlink data distribution module (2032), which is configured to distribute downlink data transmitted to the same UE from the RNC to multiple Smallcell NodeBs belonging to the same intra-frequency logic cell.

11. The SN according to claim 10, wherein the management operation module (203) further comprises:
a mobility management module (2033), which is configured, based on a corresponding radio link, to perform mobility management on a terminal covered by multiple Smallcell NodeBs in the same intra-frequency logic cell;
a code channel resource management module (2034), which is configured to judge whether the UE is in a Smallcell overlapping coverage area or a non-Smallcell overlapping coverage area according to the feedback information of each Smallcell NodeB; and to perform multiplexing on a High Speed-Dedicated Physical Data Channel, HS-DPDC, code resource in the non-Smallcell overlapping coverage area according to a judgment result.

12. The SN according to claim 11, wherein the mobility management module (2033) is further configured to perform a High Speed Downlink Packet Access, HSDPA, service handover of the UE between multiple Smallcell NodeBs.

13. The SN according to claim 12, wherein the mobility management module is further configured to receive a Signal to Interference Ratio, SIR, value of a UL_DPCCH Pilot signal of the UE reported by multiple Smallcell NodeBs in the same logic cell; to compare various SIR values, and to acquire a maximum SIR value thereof; if the maximum value is sustained for a preset time, then to judge whether the Smallcell NodeB corresponding to this maximum SIR value is identical to the Smallcell NodeB of a current UE serviced or not; if the two Smallcell NodeBs are not identical, then to schedule a High Speed-Physical Downlink Shared Channel, HS-PDSCH, in the Smallcell NodeB corresponding to this maximum SIR value, to send High Speed Downlink Packet Access, HSDPA, data to this UE; and if the two Smallcell NodeBs are identical, then to continuously maintain a current service Smallcell NodeB state.

14. The SN according to claim 8, wherein the SN and a macro NodeB are deployed separately, and the SN and all connected Smallcell NodeBs construct the logic NodeB; or the SN is integrated in the macro NodeB, and the macro NodeB and all connected Smallcell NodeBs construct a heterogeneous logic NodeB; or the SN is integrated in a Baseband Building Unit, BBU, of a BBU-Radio Remote Unit, RRU, distributed NodeB, and the BBU and all connected Smallcells construct the heterogeneous logic NodeB.

15. A Smallcell NodeB for performing cell combination based on multiple Smallcell NodeBs, **characterized in that** the Smallcell NodeB comprises:
a cell establishment module (301), configured to establish a corresponding intra-frequency logic cell based on a logic NodeB formed by combining multiple Smallcell NodeBs after a cell establishment request message sent by a Signal NodeB, SN, is received; and
a link establishment module (302), configured to establish a radio link between the Smallcell NodeB and the SN, after receiving a radio link establishment request message initiated by the SN ;
a feedback information sending module, configured to send feedback information forjudging a position of a Smallcell in which a User Equipment is located to the SN.

## Patentansprüche

1. Verfahren zum Durchführen einer Zellkombination auf Basis multipler Smallcell NodeBs, **dadurch gekennzeichnet, dass** das Verfahren umfasst:
Herstellen einer Intra-Frequenz-Logikzelle basierend auf einem logischen NodeB, welcher durch Kombinieren multipler Smallcell NodeBs, nachdem ein Signal NodeB, SN, eine Zellherstellungsanfrage eines Radio Network Controller, RNC, (S101) erhält, ausgebildet ist; wobei eine lub-Schnittstellen-Steuerungsebene eines NodeB in dem SN implementiert ist;
Beurteilen einer Position einer Smallcell, in welcher eine Anwenderausrüstung, UE, angeordnet ist, gemäß einer durch die UE initiierten Zugangsanfrage und einer durch den RNC gesendeten Funkverbindung-Herstellungsanfrage oder gemäß einer Rückkopplungsinformation jeder Smallcell NodeB in dem logischen NodeB, und Herstellen einer Funkverbindung zwischen dem SN und einem entsprechenden Smallcell NodeB (S102); und
Durchführen einer Datenübertragung auf der Intra-Frequenz-Logikzelle basierend auf der Funkverbindung (S103).

2. Verfahren nach Anspruch 1, wobei das Herstellen der Intra-Frequenz-Logikzelle basierend auf dem logischen NodeB, welcher, nachdem der SN die Zellherstellungsanfrage des RNC erhält, durch Kombinieren multipler Smallcell NodeBs ausgebildet ist, umfasst:
nach Erhalten der Zellherstellungsanfrage des RNC, Senden einer Zellherstellungsanfrage-Nachricht und einer Öffentliche-Übertragungskanal-Herstellungsanfrage-Nachricht zu multiplen Smallcell NodeBs in dem logischen NodeB durch den SN und Herstellen der Intra-Frequenz-Logikzelle und einer öffentlichen Ressource davon.

3. Verfahren nach Anspruch 1, wobei die Durchführung einer Datenübertragung auf der Intra-Frequenz-Logikzelle auf Basis der Funkverbindung umfasst:
Selektives Kombinieren und Senden basierend auf einer entsprechenden Funkverbindung eines multiplen Smallcell NodeB uplink Dedicated Channel-, DCH, und eines Enhanced Dedicated Channel-, E-DCH, Datenframes von der gleichen Intra-Frequenz-Logikzelle zu dem RNC durch den SN; und
Verteilen von zu der gleichen UE von dem RNC zu multiplen Smallcell NodeBs, welche zu der gleichen Intra-Frequenz-Logikzelle gehören, übertragener Downlink-Daten.

4. Verfahren nach Anspruch 1, wobei die Durchführung einer Ressourcenverwaltung auf der Intra-Frequenz-Logikzelle basierend auf der Funkverbindung umfasst:
Durchführen einer Mobilitätsverwaltung an einem Endgerät, welches durch multiple Smallcell NodeBs in der gleichen Intra-Frequenz-Logikzelle abgedeckt ist, basierend auf einer entsprechenden Funkverbindung; und
Beurteilen, ob sich die UE in einem Smallcell-Überlappung-Abdeckbereich oder einem nicht-Smallcell-Überlappung-Abdeckbereich befindet, entsprechend der Rückkopplungsinformation jedes Smallcell NodeB; und
Durchführen eines Multiplexings an einer High Speed-Dedicated Physical Data Channel-, HS-DPDC, Coderessource in dem nicht-Smallcell-Überlappung-Abdeckbereich entsprechend einem Beurteilungsergebnis.

5. Verfahren nach Anspruch 1, ferner umfassend: Durchführen einer High Speed Downlink Packet Access-, HSDPA, Serviceübergabe der UE zwischen multiplen Smallcell NodeBs.

6. Verfahren nach Anspruch 5, wobei das Durchführen der HSDPA-Serviceübergabe zwischen multiplen Smallcell NodeBs umfasst:
Erhalten eines Signal-Interferenz-Verhältnis-, SIR, Wertes eines UL_DPCCH-Pilot Signals der UE, welcher durch multiple Smallcell NodeBs in der gleichen Logikzelle gemeldet wurden ist, durch den SN;
Vergleichen verschiedener SIR-Werte und Erlangen eines maximalen SIR-Wertes davon;
wenn der maximale SIR-Wert für eine vorbestimmte Zeit aufrechterhalten ist, dann Beurteilen, ob der diesem maximalen SIR-Wert entsprechende Smallcell NodeB mit dem Smallcell NodeB einer gegenwärtig bedienten UE identisch ist oder nicht;
wenn die zwei Smallcell NodeBs nicht identisch sind, dann Terminieren eines High Speed-Physical Downlink Shared Channel, HS-PDSCH, in dem Smallcell NodeB entsprechend diesem maximalen SIR-Wert, um HSDPA-Daten zu dieser UE zu Senden; und
wenn die zwei Smallcell NodeBs identisch sind, dann kontinuierliches Aufrechterhalten eines gegenwärtigen Bedienung-Smallcell-NodeB-Zustands.

7. Verfahren nach Anspruch 1, wobei der SN und ein Makro-NodeB separat eingesetzt sind und der SN und alle verbundenen Smallcell NodeBs den logischen NodeB aufbauen; oder der SN in dem Makro-NodeB integriert ist und der Makro-NodeB und alle verbundenen Smallcell NodeBs einen heterogenen, logischen NodeB aufbauen; oder der SN in einer Baseband Building Unit, BBU, eines BBU-Radio Remote Unit-, RRU, Verteilten NodeB integriert ist und die BBU und alle verbundenen Smallcells den heterogenen, logischen NodeB aufbauen.

8. Signal NodeB, SN, zum Durchführen von Zellverbindungen auf Basis multipler Smallcell NodeBs, umfassend:
ein Öffentliche-Ressource-Herstellungsmodul (201), welches zum Herstellen einer Intra-Frequenz-Logikzelle basierend auf einem logischen NodeB, welcher, nachdem eine Zellherstellungsanfrage eines Radio Network Controller, RNC, erhalten ist, durch Kombinieren multipler Smallcell NodeBs ausgebildet ist, eingerichtet ist; wobei eine lub-Schnittstellen-Steuerungsebene eines NodeB in dem SN implementiert ist;
ein Verbindungsherstellungsmodul (202), welches zum Beurteilen einer Position einer Smallcell, in welcher eine Anwenderausrüstung, UE, angeordnet ist, gemäß einer durch die UE initiierten Zugangsanfrage und einer durch den RNC gesendeten Funkverbindung-Herstellungsanfrage oder gemäß einer Rückkopplungsinformation jedes Smallcell NodeB in dem logischen NodeB, und zum Herstellen einer Funkverbindung zwischen dem SN und einem entsprechenden Smallcell NodeB eingerichtet ist; und
ein Verwaltungsbetriebsmodul (203), welches zum Durchführen einer Datenübertragung auf der Intra-Frequenz-Logikzelle basierend auf der Funkverbindung eingerichtet ist.

9. SN nach Anspruch 8, wobei das Öffentliche-Ressourcen-Herstellungsmodul (201) ferner zum Senden einer Zellherstellungsanfrage-Nachricht und einer Öffentliche-Übertragungskanal-Herstellungsanfrage-Nachricht zu multiplen Smallcell NodeBs in dem logischen NodeB, nachdem die Zellherstellungsanfrage des RNC erhalten wird, und zum Herstellen der Intra-Frequenz-Logikzelle und einer öffentlichen Ressource davon eingerichtet ist.

10. SN nach Anspruch 8, wobei das Verwaltungsbetriebsmodul (203) umfasst:
ein Selektive-Kombination-Modul (2031), welches zum selektiven Kombinieren und Senden eines multiplen Smallcell NodeB uplink Dedicated Channel-, DCH, und eines Enhanced Dedicated Channel-, E-DCH, Datenframes von der gleichen Intra-Frequenz-Logikzelle zu dem RNC basierend auf einer entsprechenden Funkverbindung eingerichtet ist;
ein Downlink-Daten-Verteilermodul (2032), welches zum Verteilen von zu der gleichen UE von dem RNC zu multiplen Smallcell NodeBs, welche zu der gleichen Intra-Frequenz-Logikzelle gehören, übertragenen Downlink-Daten eingerichtet ist.

11. SN nach Anspruch 10, wobei das Verwaltungsbetriebsmodul (203) ferner umfasst:
ein Mobilitätsverwaltungsmodul (2033), welches zum Durchführen einer Mobilitätsverwaltung an einem Endgerät, welches durch multiple Smallcell NodeBs in der gleichen Intra-Frequenz-Logikzelle abgedeckt ist, basierend auf einer entsprechenden Funkverbindung, eingerichtet ist;
ein Code-Kanal-Ressource-Verwaltungsmodul (2034), welches zum Beurteilen, ob sich die UE in einem Smallcell-Überlappung-Abdeckbereich oder einem nicht-Smallcell-Überlappung-Abdeckbereich befindet, entsprechend der Rückkopplungsinformation jedes Smallcell NodeB; und zum Durchführen eines Multiplexings an einer High Speed-Dedicated Physical Data Channel-, HS-DPDC, Coderessourcce in dem nicht-Smallcell-Überlappung-Abdeckbereich entsprechend einem Beurteilungsergebnis eingerichtet ist.

12. SN nach Anspruch 11, wobei das Mobilitätsverwaltungsmodul (2033) ferner zum Durchführen einer High Speed Downlink Packet Access-, HSDPA, Serviceübergabe der UE zwischen multiplen Smallcell NodeBs eingerichtet ist.

13. SN nach Anspruch 12, wobei das Mobilitätsverwaltungsmodul ferner zum Erhalten eines Signal-Interferenz-Verhältnis-, SIR, Wertes eines UL_DPCCH-Pilot Signals der UE, welcher durch multiple Smallcell NodeB in der gleichen Logikzelle gemeldet wurden ist; zum Vergleichen verschiedener SIR-Werte und zum Erlangen eines maximalen SIR-Wertes davon; wenn der maximale Wert für eine vorbestimmte Zeit aufrechterhalten ist, dann zum Beurteilen, ob der diesem maximalen SIR-Wert entsprechende Smallcell NodeB mit dem Smallcell NodeB einer gegenwärtig bedienten UE identisch ist oder nicht; wenn die zwei Smallcell NodeBs nicht identisch sind, dann zum Terminieren eines High Speed-Physical Downlink Shared Channel, HS-PDSCH, in dem Smallcell NodeB entsprechend diesem maximalen SIR-Wert, um High Speed Downlink Packet Access-,HSDPA, Daten zu dieser UE zu senden; und wenn die zwei Smallcell NodeBs identisch sind, dann zum kontinuierlichen Aufrechterhalten eines gegenwärtigen Bedienung-Smallcell-NodeB-Zustands eingerichtet ist.

14. SN nach Anspruch 8, wobei der SN und ein Makro-NodeB separat eingesetzt sind und der SN und alle verbundenen Smallcell NodeBs den logischen NodeB aufbauen; oder der SN in dem Makro-NodeB integriert ist und der Makro-NodeB und alle verbundenen Smallcell NodeBs einen heterogenen, logischen NodeB aufbauen; oder der SN in einer Baseband Building Unit, BBU, eines BBU-Radio Remote Unit-, RRU, Verteilten NodeB integriert ist und die BBU und alle verbundenen Smallcells den heterogenen, logischen NodeB aufbauen.

15. Smallcell NodeB zum Durchführen einer Zellkombination auf Basis multipler Smallcell NodeBs, **dadurch gekennzeichnet, dass** der Smallcell NodeB umfasst:
ein Zellherstellungsmodul (301), welches zum Herstellen einer entsprechenden Intra-Frequenz-Logikzelle, welcher durch Kombinieren multipler Smallcell NodeBs gebildet ist, nachdem eine durch einen SignalNodeB, SN, gesendete Zellherstellungsanfrage-Nachricht erhalten ist, basierend auf einen logischen NodeB eingerichtet ist; und
ein Verbindungsherstellungsmodul (302), welches zum Herstellen einer Funkverbindung zwischen dem Smallcell NodeB und dem SN nach Erhalten einer durch den SN initiierten Funkverbindung-Herstellungsanfrage-Nachricht eingerichtet ist;
ein Rückkopplungsinformation-Sendemodul, welches zum Senden einer Rückkopplungsinformation zum Beurteilen einer Position einer Smallcell, in welcher eine Anwenderausrüstung angeordnet ist, zu dem SN eingerichtet ist.

## Revendications

1. Procédé pour effectuer une combinaison de cellule sur la base de multiples noeuds B de petite cellule, **caractérisé en ce que** le procédé comprend :
l'établissement d'une cellule logique intra-fréquence sur la base d'un noeud B logique formé en combinant de multiples noeuds B de petite cellule, après qu'un noeud B de signal, SN, reçoit une demande d'établissement de cellule d'un contrôleur de réseau radio, RNC, (S101) ; dans lequel un plan de commande d'interface Iub d'un noeud B est mis en oeuvre dans le SN ;
le jugement d'une position d'une petite cellule dans laquelle un équipement utilisateur, UE, est situé en fonction d'une demande d'accès émise par l'UE et une demande d'établissement de liaison radio envoyée par le RNC ou en fonction d'informations de rétroaction de chaque noeud B de petite cellule, dans le noeud B logique, et l'établissement d'une liaison radio entre le SN et un noeud B de petite cellule correspondant (S102) ; et
l'exécution d'une transmission de données sur la cellule logique intra-fréquence sur la base de la liaison radio (S103).

2. Procédé selon la revendication 1, dans lequel l'établissement de la cellule logique intra-fréquence sur la base du noeud B logique formé en combinant de multiples noeuds B de petite cellule après que le SN reçoit la demande d'établissement de cellule du RNC comprend :
après la réception de la demande d'établissement de cellule du RNC, l'envoi, par le SN, d'un message de demande d'établissement de cellule et d'un message de demande d'établissement de canal de transmission public à de multiples noeuds B de petite cellule dans le noeud B logique, et l'établissement de la cellule logique intra-fréquence et d'une ressource publique de celle-ci.

3. Procédé selon la revendication 1, dans lequel l'exécution d'une transmission de données sur la cellule logique intra-fréquence sur la base de la liaison radio comprend :
sur la base d'une liaison radio correspondante, la combinaison sélective et l'envoi, par le SN, de multiples trames de données de canal dédié, DCH, et de canal dédié amélioré, E-DCH, de liaison montante de noeud B de petite cellule de la même cellule logique intra-fréquence au RNC ; et la distribution de données de liaison descendante transmises au même UE, du RNC à de multiples noeuds B de petite cellule appartenant à la même cellule logique intra-fréquence.

4. Procédé selon la revendication 1, dans lequel l'exécution d'une gestion de ressources sur la cellule logique intra-fréquence sur la base de la liaison radio comprend :
l'exécution d'une gestion de mobilité sur un terminal couvert par de multiples noeuds B de petite cellule dans la même cellule logique intra-fréquence sur la base d'une liaison radio correspondante ; et
le jugement du fait que l'UE est dans une zone de couverture de chevauchement de petite cellule ou une zone de couverture de chevauchement non de petite cellule en fonction des informations de rétroaction de chaque noeud B de petite cellule ; et l'exécution d'un multiplexage sur une ressource de code de canal de données physique dédié à haute vitesse, HS-DPDC, dans la zone de couverture de chevauchement non de petite cellule en fonction d'un résultat de jugement.

5. Procédé selon la revendication 1, comprenant en outre : l'exécution d'un transfert de service d'accès haute vitesse par paquets de liaison descendante, HSDPA, de l'UE entre de multiples noeuds B de petite cellule.

6. Procédé selon la revendication 5, dans lequel l'exécution du transfert de service HSDPA entre de multiples noeuds B de petite cellule comprend :
la réception, par le SN, d'une valeur de rapport signal/interférence, SIR, d'un signal pilote UL_DPCCH de l'UE rapporté par de multiples noeuds B de petite cellule dans la même cellule logique ;
la comparaison de diverses valeurs de SIR et l'acquisition d'une valeur de SIR maximale parmi celles-ci ;
si la valeur de SIR maximale est maintenue pendant un temps prédéfini, alors le jugement du fait que le noeud B de petite cellule correspondant à cette valeur de SIR maximale est identique au noeud B de petite cellule d'un UE actuel desservi ou non ;
si les deux noeuds B de petite cellule ne sont pas identiques, alors la planification d'un canal de données physique partagé à haute vitesse, HS-PDSCH, dans le noeud B de petite cellule correspondant à cette valeur de SIR maximale, pour envoyer des données HSDPA à cet UE ; et
si les deux noeuds B de petite cellule sont identiques, alors le maintien continu d'un état de noeud B de petite cellule de service actuel.

7. Procédé selon la revendication 1, dans lequel le SN et un macro-noeud B sont déployés séparément, et le SN et tous les noeuds B de petite cellule connectés construisent le noeud B logique ; ou le SN est intégré dans le macro-noeud B, et le macro-noeud B et tous les noeuds B de petite cellule connectés construisent un noeud B logique hétérogène ; ou le SN est intégré dans une unité de construction de bande de base, BBU, d'un noeud B distribué d'unité radio à distance, RRU, de BBU et toutes les petites cellules connectées construisent le noeud B logique hétérogène.

8. Noeud B de signal, SN, pour effectuer une combinaison de cellule sur la base de multiples noeuds B de petite cellule, comprenant :
un module d'établissement de ressource publique (201), qui est configuré pour établir une cellule logique intra-fréquence sur la base d'un noeud B logique formé en combinant de multiples noeuds B de petite cellule, après qu'une demande d'établissement de cellule d'un contrôleur de réseau radio, RNC, est reçue ; dans lequel un plan de commande d'interface Iub d'un noeud B est mis en oeuvre dans le SN ;
un module d'établissement de liaison (202), qui est configuré pour juger une position d'une petite cellule dans laquelle un équipement utilisateur, UE, est situé en fonction d'une demande d'accès émise par l'UE et une demande d'établissement de liaison radio envoyée par le RNC ou en fonction d'informations de rétroaction de chaque noeud B de petite cellule, dans le noeud B logique, et pour établir une liaison radio entre le SN et un noeud B de petite cellule correspondant ; et
un module d'opération de gestion (203), qui est configuré pour effectuer une transmission de données sur la cellule logique intra-fréquence sur la base de la liaison radio.

9. SN selon la revendication 8, dans lequel le module d'établissement de ressource publique (201) est configuré en outre, après que la demande d'établissement de cellule du RNC est reçue, pour envoyer un message de demande d'établissement de cellule et un message de demande d'établissement de canal de transmission public à de multiples noeuds B de petite cellule dans le noeud B logique, et pour établir la cellule logique intra-fréquence et une ressource publique de celle-ci.

10. SN selon la revendication 8, dans lequel le module d'opération de gestion (203) comprend :
un module de combinaison sélective (2031), qui est configuré, sur la base d'une liaison radio correspondante, pour combiner de manière sélective et envoyer de multiples trames de données de canal dédié, DCH, et de canal dédié amélioré, E-DCH, de liaison montante de noeud B de petite cellule de la même cellule logique intra-fréquence au RNC ;
un module de distribution de données de liaison descendante (2032), qui est configuré pour distribuer des données de liaison descendante transmises au même UE, du RNC à de multiples noeuds B de petite cellule appartenant à la même cellule logique intra-fréquence.

11. SN selon la revendication 10, dans lequel le module d'opération de gestion (203) comprend en outre :
un module de gestion de mobilité (2033), qui est configuré, sur la base d'une liaison radio correspondante, pour effectuer une gestion de mobilité sur un terminal couvert par de multiples noeuds B de petite cellule dans la même cellule logique intra-fréquence ;
un module de gestion de ressource de canal de code (2034), qui est configuré pour juger si l'UE est dans une zone de couverture de chevauchement de petite cellule ou une zone de couverture de chevauchement non de petite cellule en fonction des informations de rétroaction de chaque noeud B de petite cellule ; et pour effectuer un multiplexage sur une ressource de code de canal de données physique dédié à haute vitesse, HS-DPDC, dans une zone de couverture de chevauchement non de petite cellule en fonction d'un résultat de jugement.

12. SN selon la revendication 11, dans lequel le module de gestion de mobilité (2033) est configuré en outre pour effectuer un transfert de service d'accès haute vitesse par paquets de liaison descendante, HSDPA, de l'UE entre de multiples noeuds B de petite cellule.

13. SN selon la revendication 12, dans lequel le module de gestion de mobilité est configuré en outre pour recevoir une valeur de rapport signal/interférence, SIR, d'un signal pilote UL_DPCCH de l'UE rapporté par de multiples noeuds B de petite cellule dans la même cellule logique ; pour comparer diverses valeurs de SIR et pour acquérir une valeur maximale parmi celles-ci ; si la valeur de SIR maximale est maintenue pendant un temps prédéfini, alors pour juger que le noeud B de petite cellule correspondant à cette valeur de SIR maximale est identique au noeud B de petite cellule d'un UE actuel desservi ou non ; si les deux noeuds B de petite cellule ne sont pas identiques, alors pour planifier un canal de données physique partagé à haute vitesse, HS-PDSCH, dans le noeud B de petite cellule correspondant à cette valeur de SIR maximale, pour envoyer des données d'accès haute vitesse par paquets de liaison descendante, HSDPA, à cet UE ; et si les deux noeuds B de petite cellule sont identiques, alors pour maintenir en continu un état de noeud B de petite cellule de service actuel.

14. SN selon la revendication 8, dans lequel le SN et un macro-noeud B sont déployés séparément, et le SN et tous les noeuds B de petite cellule connectés construisent le noeud B logique ; ou le SN est intégré dans le macro-noeud B, et le macro-noeud B et tous les noeuds B de petite cellule connectés construisent un noeud B logique hétérogène ; ou le SN est intégré dans une unité de construction de bande de base, BBU, d'un noeud B distribué d'unité radio à distance, RRU, de BBU et la BBU et toutes les petites cellules connectées construisent le noeud B logique hétérogène.

15. Noeud B de petite cellule pour effectuer une combinaison de cellule sur la base de multiples noeuds B de petite cellule, **caractérisé en ce que** le noeud B de petite cellule comprend :
un module d'établissement de cellule (301), configuré pour établir une cellule logique intra-fréquence correspondante sur la base d'un noeud B logique formé en combinant de multiples noeuds B de petite cellule après qu'un message de demande d'établissement de cellule envoyé par un noeud B de signal, SN, est reçu ; et
un module d'établissement de liaison (302), configuré pour établir une liaison radio entre le noeud B de petite cellule et le SN, après la réception d'un message de demande d'établissement de liaison radio émis par le SN ;
un module d'envoi d'informations de rétroaction, configuré pour envoyer au SN des informations de rétroaction pour juger une position d'une petite cellule dans laquelle un équipement utilisateur est situé.
